(19) Europäisches Patentamt
European Patent Office
Office européen des brevets

(11) **EP 2 415 055 B1**

(12) **FASCICULE DE BREVET EUROPEEN**

(45) Date de publication et mention
de la délivrance du brevet:
**09.01.2013 Bulletin 2013/02**

(21) Numéro de dépôt: **10715972.5**

(22) Date de dépôt: **24.03.2010**

(51) Int Cl.:
*C03B 5/00* (2006.01)     *G21F 9/16* (2006.01)
*G21F 9/30* (2006.01)     *C03C 1/00* (2006.01)
*G21F 9/34* (2006.01)     *C03C 3/00* (2006.01)

(86) Numéro de dépôt international:
**PCT/FR2010/050532**

(87) Numéro de publication internationale:
**WO 2010/112732 (07.10.2010 Gazette 2010/40)**

(54) **PROCÉDÉ DE CONDITIONNEMENT DE DÉCHETS RADIOACTIFS SOUS FORME DE ROCHE SYNTHÉTIQUE**

VERFAHREN ZUR VERPACKUNG VON RADIOAKTIVEM MÜLL IN FORM EINES SYNTHETISCHEN GESTEINS

PROCESS FOR PACKAGING RADIOACTIVE WASTES IN THE FORM OF SYNTHETIC ROCK

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **31.03.2009 FR 0952040**

(43) Date de publication de la demande:
**08.02.2012 Bulletin 2012/06**

(73) Titulaire: **Onectra**
**13009 Marseille (FR)**

(72) Inventeurs:
• **MARRILLET, José**
**F-34970 Lattes-Maurin (FR)**
• **ROTTNER, Bernard**
**F-13009 Marseille (FR)**

(74) Mandataire: **Domange, Maxime et al**
**Cabinet Beau de Lomenie**
**232, avenue du Prado**
**13295 Marseille Cedex 08 (FR)**

(56) Documents cités:
**EP-A1- 0 241 364     FR-A1- 2 487 328**
**FR-A1- 2 741 552     US-B1- 7 019 189**

EP 2 415 055 B1

**Description**

La présente invention concerne un procédé de conditionnement de déchets radioactifs, dans lequel on porte des déchets radioactifs en fusion et on obtient, après refroidissement, un monolithe de roche minérale, vitreuse ou vitrocristalline, dans lequel sont inclus lesdits déchets radioactifs.

La présente invention concerne, plus particulièrement, un procédé de traitement d'une catégorie particulière de déchets radioactifs, à savoir les déchets radioactifs dits FA/MA (c'est-à-dire faiblement actifs ou moyennement actifs), destinés à être stockés en surface. Il s'agit de déchets radioactifs dont la radioactivité résiduelle après 300 ans doit avoir diminué pour ne plus constituer alors un risque sanitaire à l'issue de cette période.

Parmi ces déchets, on distingue essentiellement :

- des déchets dits "homogènes" de faible granulométrie, notamment inférieure à 1 mm, tels que les terres, les boues, des cendres, des sables, des poussières ou des poudres, des poussières de filtre, et

- des déchets dits "hétérogènes" de plus forte granulométrie, notamment supérieure à 1 cm, de préférence de 1 à 5 cm, tels que des cailloux, des gravats de béton, des ferrailles, des plastiques, du verre,...

Le procédé selon l'invention s'adresse en pratique essentiellement aux déchets homogènes, mais concerne également certains déchets hétérogènes comme les gravats de béton, comme explicité ci-après.

Le procédé selon la présente invention concerne plus particulièrement le traitement de matériau constitué essentiellement de calcaire ($CaCO_3$), silice ($SiO_2$) et d'oxydes trivalents, tels qu'alumine ($Al_2O_3$) ou hématite ($Fe_2O_3$) et, éventuellement, anhydride borique ($B_2O_3$).

On retrouve ce type de matériau dans :

a- des terres calcaires à base d'aluminosilicate, carbonate de calcium et silice, contaminées suite à des fuites de radioactivité à l'extérieur d'une installation nucléaire. On évalue à environ 5 000 m3 le volume de terre contaminée à traiter en France.

b- des boues produites par les installations nucléaires, y compris les centrales nucléaires, comportant des résidus constitués d'un mélange d'oxydes métalliques, de poussière de béton provenant du bâtiment, de produits organiques et d'eau issue du procédé. Le volume d'extraits secs de ces boues contaminées à traiter représente au moins 100 $m^3$/an.

c- des bétons des infrastructures des installations nucléaires, dont les anciens réacteurs de puissance à l'arrêt, en fin de vie à démanteler. Cette troisième source représente au moins 10 000 $m^3$ de béton FA/MA.

Dans les procédés actuellement utilisés pour conditionner les déchets FA/MA visés par le procédé selon l'invention, la principale technique mise en oeuvre aujourd'hui consiste à les mélanger à un coulis de mortier de manière à constituer, après séchage, un bloc de béton renfermant le déchet initial et sa radioactivité. L'inconvénient majeur de cette technique est que les taux d'incorporation, à savoir le volume du déchet initial divisé par le volume du béton final, sont très faibles, à savoir entre 0,2 et 0,5 selon les déchets traités. En d'autres termes, le volume du béton final est très important par rapport au volume de déchet initial, ce qui implique des coûts de stockage élevés car les coûts de stockage sont rapportés au volume stocké. D'autre part, on transforme en déchet radioactifs des quantités industrielles de ciment et de béton non radioactifs.

On a tenté de développer d'autres procédés de façon à augmenter le taux d'incorporation des déchets, en alternative à l'immobilisation dans une matrice de liants hydrauliques, telle que du mortier.

En particulier, dans FR 2 741 552, on décrit un procédé de conditionnement de déchets toxiques consistant en une immobilisation des déchets dans une matrice vitreuse, c'est-à-dire conduisant à l'obtention d'un monolithe présentant la composition du point eutectique ternaire de plus faible température de fusion dans le diagramme ternaire des phases à l'équilibre thermodynamique CAS (chaux/alumine/silice), à savoir à une température thermodynamique de fusion théorique inférieure à 1 300°C.

Pour ce faire, on ajuste la composition des déchets radioactifs à conditionner à l'aide de composés de calcaire, silice et/ou alumine, de manière à obtenir, après fusion, une composition cible finale autour de l'eutectique ternaire en cause, avec :

- 10 à 16% en poids de $Al_2O_3$, et

- 59 à 65% en poids de $SiO_2$, et

- 22 à 28% en poids de CaO.

Dans les matériaux de déchets radioactifs visés par le procédé selon l'invention, l'eau s'évapore à partir de 100°C, les matières organiques brulent entre 300 et 500°C et le carbonate de calcium se dissocie vers 900°C pour devenir de la chaux (CaO) en dégazant du $CO_2$. D'autres produits susceptibles d'entrer dans la composition des déchets radioactifs à traiter, voire dans la composition des additifs, se décomposent à haute température pour devenir des oxydes; tels que nitrates, sulfates. Du fait de l'évaporation de l'eau, de la combustion des produits organiques et de la calcination, les déchets que l'on veut traiter perdent de la masse par chauffage à haute température. Le taux de perte au feu, à savoir la masse perdue divisée par la masse initiale, peut être de 25 à 40%, ce qui, avec l'effet de densification lorsque l'on passe d'un solide divisé à un monolithe, explique la possibilité de réduire le volume de déchets avec un taux d'incorporation important.

Toutefois, ce procédé présente un certain nombre d'inconvénients suivants qui en empêche la fabrication industrielle :

- La forte teneur en silice du verre obtenu (59 à 65% en poids de $SiO_2$) a pour conséquence une forte viscosité du bain de fusion, surtout à basse température (moins de 1 300°C), ce qui rend difficile l'homogénéisation du bain de fusion lorsque celui-ci représente un volume important. Or, il se produit encore des dégazages au-delà de 1 000°C, ce qui génère des bulles dans le bain de fusion. Ces bulles ne peuvent pas s'échapper du bain de fusion compte-tenu de sa forte viscosité, de sorte que le taux d'incorporation des déchets radioactifs dans le monolithe final s'en trouve diminué.

- Compte-tenu de ces risques d'éclatement du verre, le brevet FR 2 741 552 impose la mise en oeuvre d'une étape de recuit du monolithe à une température supérieure à 700°C avant l'étape de refroidissement. La vitesse de refroidissement préconisée pour des blocs de verre de taille industrielle est de 1°C/h à partir d'une température de recuit de 750°C. Ceci impose une durée de refroidissement d'un mois du monolithe avant d'atteindre la température ambiante. Pour une installation industrielle traitant 1 000 tonnes par an, un four de refroidissement devrait pouvoir contenir jusqu'à 400 blocs de verre immobilisés pendant 1 mois.

- Par ailleurs, la composition du verre, dans sa composition eutectique ternaire, est assez éloignée de celle de la plupart des déchets radioactifs à base de terre calcaire et/ou béton, nécessitant, dès lors, un ajustement de la composition amenant à doubler la masse initiale du déchet pour obtenir la composition cible. En pratique, le taux d'incorporation obtenu dans FR 2 741 552 ne dépasse pas 2.

- Enfin, compte-tenu de l'inhomogénéité du produit à fondre, il est nécessaire de mettre en oeuvre une température de fusion bien supérieure à la température thermodynamique théorique de fusion, comme explicité ci-après.

Pour toutes ces raisons, le procédé décrit dans FR 2 741 552 n'a jamais pu être mise en oeuvre industriellement.

On connaît également des procédés, tels que décrits dans FR 2 502 999, consistant à réaliser une roche artificielle, c'est-à-dire un solide comportant des phases cristallines et des phases vitreuses, en plongeant des électrodes dans les matériaux de déchets radioactifs à confiner, puis à faire passer un courant jusqu'à fondre l'environnement des électrodes. Dans WO 03/038361, ce traitement est appliqué directement aux déchets conditionnés dans des conteneurs.

Ce procédé n'est pas applicable tel quel au traitement de déchets radioactifs consistant en des terres calcaires et/ou gravats de béton ou boues de centrales nucléaires, car le calcaire qu'ils contiennent produit de la chaux qui réagit violemment avec l'eau et est extrêmement soluble, ce qui est incompatible avec le conditionnement de déchets radioactifs. En outre, le calcaire se transforme en chaux à 900°C avec émanation de $CO_2$, mais la chaux (CaO) fond à plus de 2 500°C. A cette température, la plupart des éléments radioactifs (césium, ruthénium, plutonium) sont volatils. Enfin, le conteneur métallique ou en béton des déchets ne résisterait pas à ces températures.

Le but de la présente invention est de fournir un procédé de conditionnement au confinement de déchets radioactifs, qui permette d'atteindre un taux d'incorporation élevé, supérieur à 2, notamment de 2 à 4, dans des conditions d'application industrielle.

Un autre but de la présente invention est de fournir un déchet final confiné sous forme de monolithe plus ou moins cristallisé, de type vitreux, ou polycristallin avec des joints de grains (roche artificielle), qui vérifie les propriétés de résistance à la compression du bloc solide d'au moins 8 MPa et d'insolubilité qui le rendent propre à un stockage dans les centres de stockage en surface.

Le critère de résistance à la compression signifie que le bloc de déchet final doit être suffisamment solide pour ne pas éclater en petits morceaux, lors du refroidissement ou ultérieurement.

Le critère de d'insolubilité signifie que le déchet final ne doit pas être soluble et, surtout, qu'il ne réagit pas avec l'eau.

Enfin, un autre but de la présente invention est de fournir un procédé de confinement qui permette une application industrielle, avec un temps de refroidissement réduit, sans bien sur que les contraintes thermiques de refroidissement ne fassent éclater le bloc, et une température de fusion compatible avec la rétention dans le bain de fusion d'au moins 50% des éléments radioactifs volatiles.

Le procédé selon l'invention consiste à chauffer des déchets après ajustement de leur composition, par ajout d'additifs ou par mélange de déchets, de manière à les faire fondre et à les couler dans un conteneur dans lequel ils sont conditionnés sous forme de monolithes de roche artificielle ou verre.

Plus précisément, la présente invention fournit un procédé de conditionnement de déchets radioactifs, dans lequel on réalise les étapes successives suivantes :

a/ on traite des déchets radioactifs dont la composition de l'extrait sec après calcination à 950°C, appelé ci-après composition de départ, comprend au moins 90% de composés choisis parmi $CaO$, $Fe_2O_3$, $SiO_2$, $Al_2O_3$ et $B_2O_3$, et on complémente la composition desdits déchets de manière à atteindre une composition cible desdits déchets complémentés après calcination, et

b/ on porte lesdits déchets radioactifs complémentés en fusion et

c/ on coule ledit bain de fusion dans un conteneur, de manière à obtenir, après refroidissement, un produit comprenant une roche synthétique, vitreuse ou vitro-cristalline, présentant ladite composition cible,

caractérisé en ce que ladite composition de départ et ladite composition cible répondent aux définitions suivantes, dans un système ternaire $CaO$, $SiO_2$ et $X_2O_3$, dans lequel $X_2O_3$ est un oxyde trivalent ou mélange d'oxydes trivalents choisis parmi $Al_2O_3$, $Fe_2O_3$ et $B_2O_3$ :

- pour ladite composition de départ :

    - $P_C$ et $P_X$ sont inférieurs à 90%, et

    - $P_S$ est inférieur à 75%, et

- pour ladite composition cible :

    - $P_C$ est de 35 à 60%, de préférence de 40 à 50 %, et

    - $P_S$ est de 10 à 45%, de préférence de 20 à 40%,

    avec dans les deux cas :

    . $P_C + P_S + P_X = 100\%$, et

    . $P_X = P_A + P_H + P_B$, avec

    . $P_C = [M_C/(M_C + M_S + M_A + 0,28 M_H + 2 M_B)] \times 100\%$, et

    . $P_S = [M_S/(M_C + M_S + M_A + 0,28 M_H + 2 M_B)] \times 100\%$, et

    . $P_A = [M_A/(M_C + M_S + M_A + 0,28 M_H + 2 M_B)] \times 100\%$, et

    . $P_H = [0,28 M_H/(M_C + M_S + M_A + 0,28 M_H + 2 M_B)] \times 100\%$, et

    . $P_B = [2 M_B/(M_C + M_S + M_A + 0,28 M_H + 2 M_B)] \times 100\%$, et

    . $P_i$ et $M_i$, avec i= C, S, A, H ou B, sont les pourcentages massiques ($P_i$) et, respectivement, les masses ($M_i$) de $CaO$ (i =C), $SiO_2$ (i=S), $Al_2O_3$ (i=A), $Fe_2O_3$ (i=H) et $B_2O_3$ (i=B).

On comprend qu'à l'étape a/, on complémente la composition de dits déchets radioactifs, de manière à atteindre une dite composition cible, laquelle est aussi la composition du monolithe obtenu à l'issue de l'étape c/.

On entend ici par "composition de départ", la composition des déchets radioactifs non complémentés, celle-ci étant, toutefois, calculée en fonction de ce qu'elle serait après calcination.

Dans la composition de départ, le pourcentage en masse est rapporté à la masse de CaO et non de CaCO$_3$, et/ou Ca(OH)$_2$, le cas échéant, car CaCO$_3$ et Ca(OH)$_2$ après calcination à 950°C se transforment en CaO. De même, en ce qui concerne l'alumine, la silice et l'oxyde de bore, les déchets radioactifs de départ comprennent en général plutôt des précurseurs, tels que des hydrates, des sels de silicate, sulfate, nitrate, des acides, notamment l'acide borique H$_3$BO$_3$, et/ou des hydroxydes de ces molécules donnant, après calcination, de l'alumine, de la silice et de l'oxyde de bore.

Il est ainsi possible de situer la composition de départ et la composition cible dans le même diagramme ternaire CaO, SiO$_2$, X$_2$O$_3$.

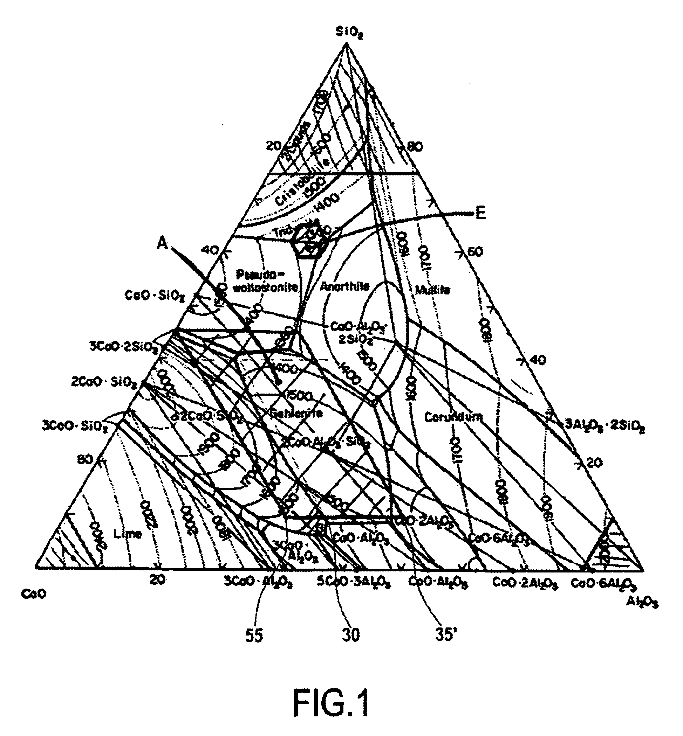

Cette composition cible est particulièrement avantageuse car elle permet d'obtenir, comme il sera explicité ci-après, un bain de fusion relativement fluide et donc plus homogène, d'où il résulte qu'il est possible d'obtenir des monolithes vitreux ou cristallins, présentant des propriétés mécaniques avantageuses sans nécessiter de recuit et avec des durée de refroidissement réduites. Ceci est du, en particulier, en ce que, dans ce domaine relativement réduit de la composition cible, les diagrammes ternaires chaux/alumine/silice, chaux/hématite/silice et chaux/anhydride borique/silice présentent des similarités avec, dans tous les cas, une vallée eutectique sensiblement au centre des parallélogrammes ainsi définis, comme explicité ci-après et représentés sur la figure 1. Le parallélogramme est défini volontairement de manière à ce que la vallée eutectique soit excentrée, à cause de la dissymétrie de la vallée, présentant un flanc gauche abrupt (la température de fusion augmente très rapidement lorsque l'on s'éloigne de l'eutectique) et un flanc droit en pente douce.

Un monolithe d'une composition cible, telle que définie ci-dessus, permet d'atteindre des taux d'incorporation (volume du déchet initial/volume du déchet conditionné sous forme de monolithe) supérieurs à 2 pour des déchets dont ladite composition de départ est constituée d'au moins 90% de composés choisis parmi CaO, SiO$_2$, Al$_2$O$_3$, Fe$_2$O$_3$ et B$_2$O$_3$, d'une part, et, d'autre part, et qui vérifie les pourcentages massique suivants, après calcination, dans un système ternaire CaO, SiO$_2$, X$_2$O$_3$ tel que défini ci-dessus:

$$P_S < 75\%, \ P_C < 90\%, \ et \ P_X < 90\%.$$

On observe, en particulier, que l'on obtient des taux d'incorporation compris entre 2,4 et 8,1 suivant la composition des déchets de départ.

Un autre avantage de cette composition cible des monolithes incluant les déchets radioactifs immobilisés dans un bloc solide plus ou moins cristallisé, sous forme de verre ou, de préférence, sous forme de roche artificielle de solides polycristallins avec des joints de grains, est qu'il respecte les spécifications règlementaires en termes de résistance à la compression du bloc solide d'au moins 8 Mpa, et résistance à la solubilisation.

Par ailleurs, ce procédé est particulièrement intéressant en application industrielle car il permet :

-    de couler de gros blocs de dits monolithes, notamment d'au moins 200 l, voire jusqu'à 500 l, dans un temps de refroidissement raisonnable, notamment pas plus de deux semaines, voire pas plus d'une semaine et la plupart du temps en moins de 24 heures, sans, bien sur, que les contraintes thermiques ne fassent éclater le bloc en petits morceaux lors du refroidissement, et

-    une rétention, dans le bain de fusion puis dans le bloc solide de monolithe, d'au moins 50% des éléments radioactifs volatiles tels que le césium ou plutonium.

La composition, dans le système ternaire CaO, SiO$_2$, X$_2$O$_3$, correspond à un domaine de phase cristalline dans les différents diagrammes ternaires (CaO, SiO$_2$, Al$_2$O$_3$), (CaO, SiO$_2$, Fe$_2$O$_3$) et (CaO, SiO$_2$, Be$_2$O$_3$) correspondant à la région de vallées eutectiques, à savoir:

-    pour le diagramme CAS (chaux/alumine/silice) (figure 1), la vallée eutectique séparant la larnite (Ca$_2$SiO$_4$) et la géhlénite (Ca$_2$Al$_2$SiO$_7$) d'une part, et, d'autre part, les vallées eutectiques entre la larnite et la rankinite (3CaO. 2SiO$_2$) et la pseudo-wollastonite (CaO.SiO$_2$) et, la vallée eutectique séparant la pseudo wollastonite et la géhlénite avec un eutectique triple pseudo-wollastonite/géhlénite/anorthite (CaO.Al$_2$O$_3$.2SiO$_2$), et enfin, en bas du diagramme, les 2 vallées entre 3CaO.Al$_2$O$_3$, 5CaO.3Al$_2$O$_3$ et CaO.Al$_2$O$_3$.

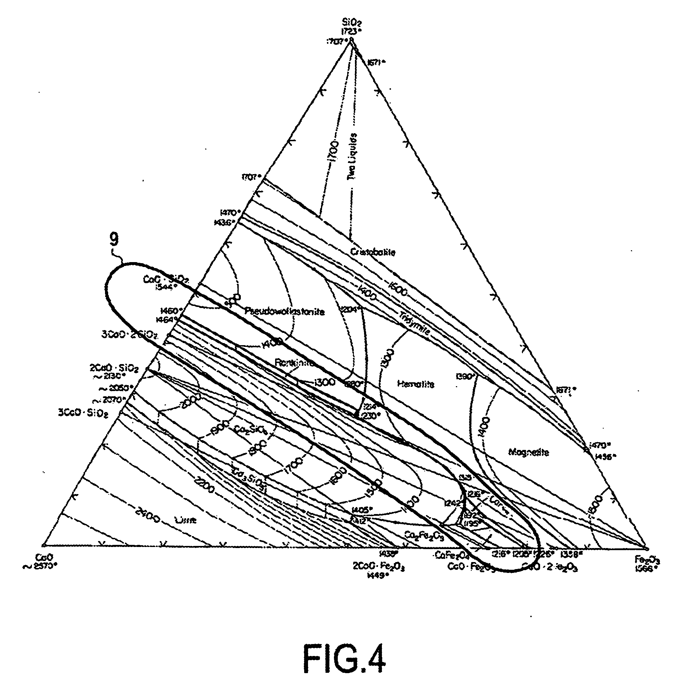

-    pour le diagramme ternaire chaux/hématite/silice (figure 4), cette composition cible correspond aux régions des vallées eutectiques entre la larnite et l'hématite, la larnite et la rankinite, la rankinite et la pseudo-wollastonite, et, en bas du diagramme, l'ensemble de vallées entre 2CaO.Fe$_2$O$_3$, CaO.Fe$_2$O$_3$, CaO.2Fe$_2$O$_3$ et hématite.

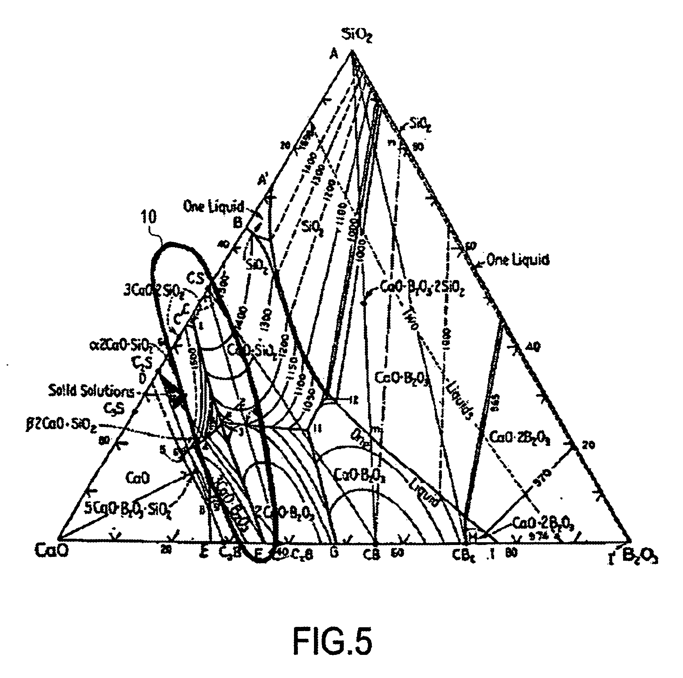

-    pour le diagramme chaux/anhydride borique/silice (figure 5), cette composition cible correspond aux régions des vallées eutectiques entre la larnite ($2CaO.SiO_2$, indiqué par "$C_2S$" sur le diagramme) et la pseudo-wollastonite ($CaO.SiO_2$), puis, plus bas, entre les composés $3CaO.B_2O_3$ et $2CaO.B_2O_3$.

Initialement, les inventeurs ont testé des déchets à base de terre calcaire en y ajoutant de l'alumine, et différents autres déchets à base de $CaCO_3$, $SiO_2$ et $Al_2O_3$ en y ajoutant de l'alumine. C'est ainsi qu'ils ont défini un domaine de composition cible tel que défini ci-dessus dans le diagramme ternaire CAS. Puis, ils ont constaté empiriquement qu'en remplaçant l'alumine par d'autres oxydes trivalents, à savoir l'anhydride borique $B_2O_3$, notamment présent en grande quantité dans les concentrats d'évaporateur de centrales nucléaires, et l'hématite $Fe_2O_3$, présent en grande quantité dans les boues de centrales nucléaires, on pouvait assimiler l'hématite $Fe_2O_3$ et l'anhydride borique $B_2O_3$ à de l'alumine dans le diagramme CAS (chaux/alumine/silice), pour autant que l'on affecte aux masses d'hématite et d'anhydride borique prises en compte les coefficients de 0,28 et, respectivement, 2 décrits ci-dessus. En d'autres termes, on prend en compte une masse totale d'oxyde trivalent équivalent à l'alumine, à savoir l'addition de la masse d'alumine réelle + 0,28 fois la masse d'hématite + 2 fois la masse d'anhydride borique. Dans ce cas, la composition cible correspond à des compositions contenues dans un diagramme théorique CXS, X représentant $X_2O_3$, à savoir un mélange de $Al_2O_3$, $Fe_2O3$ et $B_2O_3$, et correspondant au parallélogramme A de la figure 1, dans le diagramme CAS.

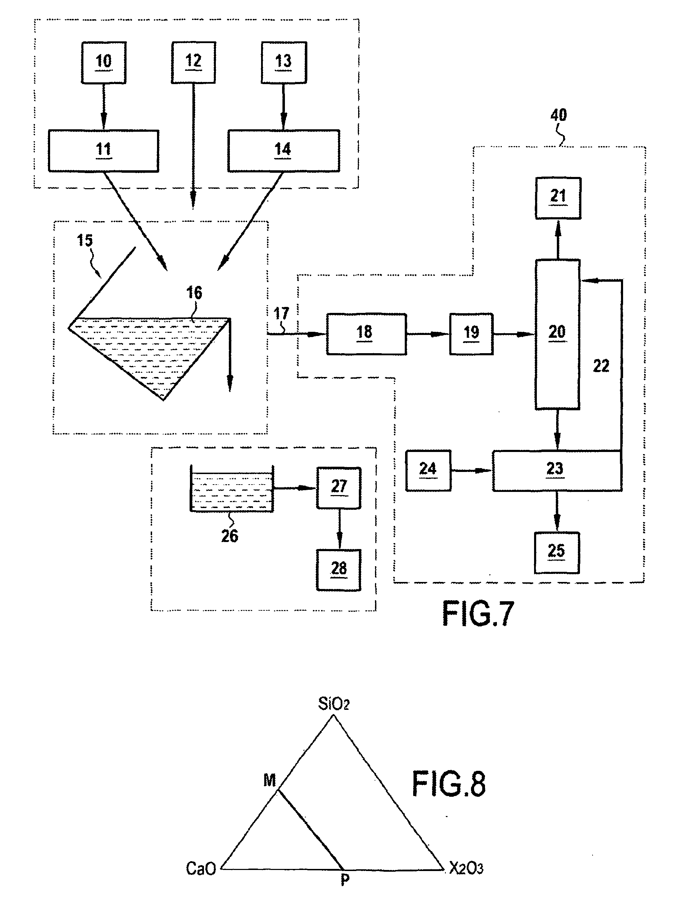

Les coefficients d'équivalence de 0,28 et 2 mentionnés ci-dessus ne résultent pas simplement d'une constatation empirique mais sont corroborés à partir de la comparaison des diagrammes ternaires chaux/alumine/silice, chaux/hématite/silice et chaux/anhydride borique/silice, comme explicité plus loin en référence à la figure 8, et résultant de ce que :

- un ensemble relativement rectiligne de vallées eutectiques rejoint le point M de la ligne $CaO-SiO_2$ à un point P de ligne $CaO-X_2O_3$ dans les trois triangles des trois diagrammes ternaire, et

- la position du point M ne dépend pas de la nature de l'oxyde trivalent et se situe dans le domaine de la rankinite. En revanche, les positions du point P, pour les diagrammes des différents oxydes trivalents, permettent de déterminer ces coefficients d'équivalence.

On notera, en outre, que, dans les trois diagrammes, si on déséquilibre la composition pour s'éloigner de l'eutectique, la température de fusion augmente relativement vite à gauche de la vallée (excès de chaux) et relativement plus lentement à droite de la vallée (déficit de chaux).

Selon la présente invention, le fait que les régions de la composition cible soient autour de vallées eutectiques binaires, plutôt qu'autour d'un eutectique ternaire comme dans FR 2 741 552, est beaucoup mieux adapté au traitement de déchets. En effet, la composition d'un déchet est, par nature, variable et une vallée s'étendant autour d'une ligne, sensiblement rectiligne dans un diagramme ternaire, offre un éventail de compositions cible plus important, ce qui permet d'obtenir cette composition cible en mettant en oeuvre, le cas échéant, des quantités d'additifs réduites par rapport à celles nécessaires pour un monolithe de composition autour d'un point ternaire, comme dans le brevet antérieur FR 2 741 552.

Enfin, un autre avantage de la composition cible selon la présente invention tient en ce que les teneurs en silice sont, comparativement, réduites par rapport à celles de la composition de l'eutectique ternaire du brevet antérieur FR 2 741 552, ce qui correspond à une viscosité comparativement réduite. Il en résulte un écart réduit entre la température de fusion effective et la température de fusion thermodynamique théorique.

En effet, les températures de fusion indiquées dans les diagrammes ternaires, tels que les diagrammes CAS, sont des températures d'équilibre thermodynamique, en ce sens qu'elles ont été obtenues en fondant d'abord le mélange à une température très supérieure, de manière à parfaitement homogénéiser le bain, puis en diminuant lentement la température et en relevant la température de cristallisation. En pratique, toutefois, l'hétérogénéité du mélange impose de chauffer bien au-delà de la température thermodynamique pour obtenir la fusion des différents constituants d'agrégats de $SiO_2$, $CaCO_3$ et $X_2O_3$. En effet, même avec un mélange intime, par exemple de terre avec de la poudre d'alumine, il faudra fondre un grain d'alumine et un grain de terre pour obtenir un mélange à l'échelle moléculaire, c'est-à-dire une homogénéisation de la composition chimique.

Ainsi les essais montrent que l'eutectique sélectionné selon la présente invention présente des caractéristiques intéressantes pour la fusion des déchets car la température de fusion effective ne dépasse pas la température thermodynamique de plus de 100°C, voire 70°C, pour le traitement de terre complémenté d'alumine, 270°C pour le traitement de béton complémenté par de l'alumine, alors que, pour un verre autour de la composition eutectique ternaire selon le brevet FR 2 741 752, l'écart peut dépasser 500°C, ce qui diminue fortement l'intérêt de travailler autour du point de l'eutectique ternaire du diagramme CAS à une température thermodynamique théorique de 1 170°C, mais qui, pour des raisons d'homogénéisation de la composition chimique, nécessite des températures de fusion effectivement sensiblement identiques à celles obtenues selon la présente invention.

Enfin, par ailleurs, une faible viscosité limite la subsistance de bulles de gaz dans le produit final, ce qui aurait un effet négatif, d'une part, sur le taux d'incorporation mais, d'autre part, également sur la résistance mécanique à l'éclatement, étant entendu que, comme mentionné précédemment, dans le cadre du traitement de déchets radioactifs, l'objectif est d'obtenir un bloc solide, résistant à la fissuration et à l'éclatement.

On préfère les compositions cible présentant une teneur en silice $P_S$ inférieure à 40%, de façon à réduire la viscosité du bain de fusion et, ainsi, en faciliter l'homogénéisation et réduire la température de fusion.

Plus particulièrement, un procédé selon la présente invention présente les caractéristiques suivantes :

- à l'étape b/, on chauffe les déchets radioactifs dans un creuset et on les porte en fusion à une température de 1 250 à 1 650°C, et
- à l'étape c/, on coule ledit bain de fusion dans un conteneur, de préférence de contenance d'au moins 200 l, de préférence encore de contenance d'au moins 500 l, en vue de former desdits monolithes et on refroidit ledit bain de fusion ainsi conditionné, sans recuit, jusqu'à température ambiante, en une durée inférieure à 15 jours, de préférence inférieure à une semaine, de préférence encore inférieure à 24 heures.

Pour des monolithes de poids réduit, inférieur ou égal à 2 kg, le refroidissement peut même être obtenu en moins de 2 heures.

On comprend qu'à l'étape b-, la température de fusion représente la température à laquelle le mélange du bain de fusion est homogénéisé en composition chimique.

La présence d'hématite ($Fe_2O_3$) et/ou d'anhydride borique ($B_2O_3$) à la place et/ou en complément à de l'alumine ($Al_2O_3$) dans ladite composition cible a pour effet de baisser significativement les valeurs de température de fusion, surtout en présence d'anhydride borique.

En pratique, on obtient des monolithes cible décrits ci-dessus à partir de ces produits de départ avec des températures de fusion comprises entre 1 550 et 1 620°C, le plus souvent entre 1 500 et 1 600°C, en l'absence d'oxyde de bore ou anhydride borique dans la composition cible.

Dans un mode préféré de réalisation, à l'étape c/, on effectue l'étape de refroidissement en deux étapes, à savoir :

c.1/ on limite la vitesse de refroidissement dudit conteneur rempli dudit bain de fusion, dans la phase de refroidissement entre 1 250 et 1 000°C, à une vitesse de refroidissement comprise entre 50°C/h et 250°C/h, de préférence en l'enfouissant dans un lit de particules de matériau réfractaire, telles que des particules d'alumine, et en le laissant refroidir naturellement dans un local à température ambiante et, de préférence encore en balayant ledit conteneur avec un flux d'air à température ambiante à une vitesse de 0,1 à 1 m/s, puis

c.2/ on termine le refroidissement dudit conteneur de 1 000°C jusqu'à la température ambiante, sans limitation de vitesse de refroidissement, de préférence en plaçant ledit conteneur à l'air libre ou en le trempant dans l'eau froide jusqu'à ce que sa température descende jusqu'à la température ambiante.

A l'étape c.1/ ci-dessus, on diminue la vitesse de manière à permettre la cristallisation du monolithe, tout en préservant une vitesse minimale de refroidissement, de manière à ce que ledit conteneur ne fonde pas.

Plus particulièrement, lesdits déchets radioactifs sont constitués de terre calcaire, gravats de béton, boues de centrales nucléaires, concentrats d'évaporateurs de centrales nucléaires, sable, et/ou cendres de déchets radioactifs incinérés.

Plus particulièrement encore, lesdits déchets radioactifs de départ présentent une composition de départ répondant à la définition suivante dans le système ternaire $CaO/SiO_2/X_2O_3$, dans lequel $X_2O_3$ et $P_I$ ont les significations données précédemment :

PC et $P_X$ sont inférieurs à 75 % et PS est inférieur à 60 %.

Dans un mode préféré de réalisation, ladite composition cible correspond à des pourcentages massiques suivants :

- $P_C$ compris entre 40 et 50%, et

- $P_S$ compris entre 20 et 40%.

Ce domaine de composition cible permet d'obtenir un matériau polycristallin en visant une composition proche mais différente de l'eutectique, étant entendu que l'obtention d'un matériau polycristallin est plus favorable que l'obtention d'un verre. En effet, le matériau polycristallin, résiste mieux en général qu'un verre aux contraintes internes générées lors du refroidissement, même si celui-ci est très rapide, moins de 24 h, et ne risque donc pas d'éclater sous l'effet de ces contraintes. On favorise la cristallisation par 2 effets : en s'écartant de l'eutectique, ou en réduisant la vitesse de refroidissement autour de la température de cristallisation (entre 1250°C et 1000°C dans notre cas). Lorsque l'on s'écarte de l'eutectique, il vaut mieux viser le domaine de la gehlénite où les températures de fusion augmentent peu au-dessus de celle de l'eutectique, que celui de la larnite, où les températures de fusion augmentent très rapidement.

Plus particulièrement encore, dans un procédé selon l'invention, on réalise les étapes selon lesquelles :

a. 1/ on traite une terre calcaire et/ou des gravats de béton dont ladite composition de départ répond à la définition suivante dans un système ternaire $CaO/SiO_2/X_2O_3$, dans lequel $X_2O_3$ et $P_I$ ont les significations données ci-dessus :

- $P_C$ est compris entre 30 et 80%, et

- $P_X$ est inférieur à 20%,

a.2/ on ajoute de 5 à 50% de $X_2O_3$, choisi parmi $Al_2O_3$, $Fe_2O_3$ et $B_2O_3$.

Plus particulièrement encore, à l'étape a.2/, on réalise un ajout de $B_2O_3$ inférieur à 10%, de préférence inférieur à 5% de la masse des déchets radioactifs à traiter et/ou $P_B$ est inférieur à 15%, de préférence inférieur à 7% dans ladite composition cible du monolithe obtenu.

L'anhydride borique a la propriété de diminuer la température de fusion de notre mélange. Ainsi, avec un ajout de 10% d'anhydride borique par rapport à la masse des déchets radioactifs à traiter, on arrive à baisser la température de fusion à 1 250°C pour le traitement de terre calcaire, gravats de béton et/ou boues de centrales nucléaires. Toutefois, l'anhydride borique présente l'inconvénient de fondre à très basse température, à savoir dès 300°C, de sorte qu'en présence d'oxyde de bore ou anhydride borique fondu, les dégagements gazeux générés par la calcination des carbonates, qui intervient vers 900°C, produisent une mousse, le résultat étant un matériau obtenu, extrêmement poreux. C'est pourquoi, de préférence, on limite l'ajout d'oxyde de bore ou anhydride borique à 5%, ce qui est suffisant pour abaisser la température de fusion d'environ 100°C pour le traitement de déchets radioactifs constitués de terre calcaire et/ou gravats de béton et/ou boues de centrales nucléaires.

De préférence encore, à l'étape a.2/ :

- l'ajout de $B_2O_3$ est inférieur à 5% de la masse des déchets radioactifs à traiter à l'étape a.1/ et/ou $P_B$ est inférieur à 7% dans ladite composition cible du monolithe obtenu, et

- l'ajout de $Al_2O_3$ et $Fe_2O_3$ est supérieur à 10%, de préférence supérieur à 20% de la masse des déchets radioactifs à traiter à l'étape a.1/, et/ou $P_X$ est supérieur à 15%, de préférence supérieur à 30% dans ladite composition cible du monolithe obtenu.

Dans la mesure où il est souvent difficile de mesurer de façon précise la composition des déchets radioactifs de départ et/ou des ajouts, compte-tenu de leur inhomogénéité, il apparaît pertinent de les caractériser aussi en fonction de la composition cible visée. C'est pourquoi, on a caractérisé ci-dessus l'ajout d'oxyde de bore en donnant la valeur de $P_B$ dans ladite composition cible du monolithe. On peut remonter à la composition de l'ajout par calcul en retirant la composition de départ et en prenant en compte la perte de masse par fusion ou perte au feu.

Selon une variante avantageuse de réalisation de l'invention, on réalise le mélange de déchets radioactifs de compositions différentes pour obtenir ladite composition cible, sans ajout d'oxyde(s) trivalent(s) non radioactif(s) choisi(s) parmi $Al_2O_3$, $Fe_2O_3$ et $B_2O_3$.

On peut ainsi envisager de traiter des produits de départ, à savoir des déchets radioactifs, en dehors de la définition générale de composition des déchets radioactifs donnée ci-dessus, à savoir $P_C$ et $P_X$ inférieurs à 75% et $P_S$ inférieur à 60%, pour autant que le mélange aboutisse directement à une dite composition cible. En outre, on obtient des taux d'incorporation supérieurs à 3.

Plus particulièrement encore, on réalise le mélange de :

1/ une dite terre calcaire et/ou desdits gravats de béton de dites compositions de départ suivantes :

$P_C$ compris entre 50 et 80%, et

2/ une boue de déchets radioactifs, de préférence une boue de centrale nucléaire, de dite composition de départ suivante :

$P_X$ compris entre 10 et 70%, de préférence de 15 à 40% et $P_C$ inférieur à 50%, de préférence inférieur à 35%, notamment de 30 à 40%.

Dans les deux domaines de composition de terre et, respectivement, boue radioactive, dans chaque type de composition de terre, il existe au moins une composition de boue convenable pour obtenir directement la composition cible par mélange des deux déchets dans une proportion relative en pourcentage massique de 30/70 à 70/30, de préférence 40/60 à 60/40.

Plus particulièrement, dans un procédé selon l'invention, à l'étape a/, on réalise les étapes suivantes dans lesquelles :

a.1/ on traite un terre calcaires et/ou des gravats de béton dont ladite composition de départ répond à la définition suivante, dans le système ternaire $CaO/SiO_2/X_2O_3$ :

- $P_C$ est compris entre 50 et 80%, et

- $P_S$ est compris entre 20 et 50%, et

- $P_X$ est inférieur ou égal à 20%, de préférence compris entre 4 et 10%, $X_2O_3$ étant un oxyde trivalent ou un mélange d'oxydes trivalents choisis parmi $Al_2O_3$ et $Fe_2O_3$, et $P_B$ =0, et

a.2/ on ajoute l'additif contenant $X_2O_3$ de manière à atteindre ladite composition cible de monolithe suivante dans le système ternaire $CaO/SiO_2/X_2O_3$ :

- $P_C$ est compris entre 35 et 55%, et

- $P_S$ est compris entre 15 et 40%, et

- $P_X$ est compris entre 10 et 45%.

Dans un mode de réalisation avantageux, on extrait les grosses pierres des terres calcaires de manière à rapprocher ladite composition de départ de ladite composition cible.

Plus particulièrement, on extrait des terres calcaires les grosses particules, de taille supérieure à 1 cm, de préférence supérieure à 5 cm, de manière à ce que la composition de la partie fine s'approche de ladite composition cible, de préférence de manière à ce qu'elle atteigne ladite composition cible.

Plus particulièrement encore, on extrait les grosses particules des terres calcaires avec un seuil de coupure granulométrique permettant d'éliminer 20 à 80% de la masse de terre initiale. Selon la distribution granulométrique de la terre ce seuil sera supérieur à 1 cm, de préférence supérieur à 5 cm.

La séparation granulométrique des pierres, notamment lors du traitement d'une terre calcaire, présente deux intérêts :

- lorsque la contamination est d'origine exogène, ce qui est le plus souvent le cas, les grains petits ou gros sont contaminés en surface et non pas en volume. En conséquence, les petits grains présentent une activité radioactive massique supérieure à celle des gros, et
- les pierres sont essentiellement constituées de calcaire avec une gangue argileuse, laquelle est plus concentrée en alumine que la terre brute, de sorte que la séparation des pierres de grosse taille permet de diminuer la quantité d'alumine à ajouter aux déchets pour obtenir la composition cible.

Ainsi, le tri granulométrique de la terre radioactive à traiter peut même permettre de modifier ladite composition de départ pour qu'elle rentre dans la définition de ladite composition cible, en extrayant les grosses pierres, lesquelles peuvent ensuite être transformées en déchets TFA par simple lavage.

Dans un mode particulier de réalisation, à l'étape b/, on réalise le chauffage des déchets, puis du bain, par rayonnement à partir d'un arc électrique produit au-dessus des déchets.

Dans un autre mode particulier de réalisation, à l'étape b/ on commence la chauffe par rayonnement à partir d'un arc électrique au dessus des déchets, puis lorsque les déchets commencent à fondre, on plonge les électrodes dans le bain pour terminer la chauffe.

Dans ce mode particulier, lorsque les électrodes sont en graphite, en présence du graphite des électrodes, les oxydes de fer présents dans les déchets à traiter se réduisent en fer métallique, selon les mêmes réactions chimiques que celles se produisant dans un haut fourneau, lorsque l'on chauffe du minerai de fer en présence de charbon.

Le bain en fusion se sépare alors en 2 phases, l'une constituée de la roche synthétique présentant ladite composition cible selon l'invention, l'autre de fonte (fer+carbone). Après solidification, on retrouve le fer sous forme de petites inclusions métalliques dans la roche synthétique, lesdites petites inclusions étant de taille inférieure à 2 cm, en pratique de l'ordre de 0,5 à 2 cm. Ces inclusions ont été observées pour de faibles quantités de fer et/ou d'oxyde de fer, à savoir moins de 20% de la masse selon les conditions opératoires. En présence de plus fortes quantités de fer et/ou d'oxyde de fer, le bas du bloc est constitué de fonte, le haut du bloc est constitué de roche synthétique, et des petites inclusions sont incorporées dans la roche synthétique à l'interface avec la fonte.

Dans un mode particulier de réalisation, le procédé comprend donc les caractéristiques suivantes :

- à l'étape b/, on porte lesdits déchets radioactifs complémentés en fusion, par chauffage par effet Joule, à l'aide d'électrodes en graphite plongées dans le matériau de déchets radioactifs à traiter, et

- à l'étape c/, on obtient un produit biphasique comprenant une matrice de roche synthétique présentant ladite composition cible dans laquelle $X_2O_3$, est choisi parmi $Al_2O_3$ et $B_2O_3$, ladite matrice incorporant des inclusions de fonte.

On comprend que la masse totale des inclusions de fonte est en rapport avec la masse de fer ou oxyde de fer initialement contenue dans les compositions de départ, de préférence inférieure à 20%.

De préférence, ledit matériau de déchets radioactifs est placé dans un creuset refroidi constitué de tuyaux jointifs en acier, dans lesquels on fait circuler un liquide tel que de l'eau, de manière à maintenir le creuset à une température inférieure à la température de fusion de l'acier entrant dans sa composition.

De façon connue, ces creusets sont constitués de tuyaux en acier parcourus par de l'eau de façon à maintenir la température de l'acier à une température inférieure à la température de fusion de l'acier, soit environ 1 550°C.

Selon d'autres caractéristiques avantageuses d'un procédé selon l'invention :

- avant d'introduire lesdits déchets radioactifs dans ledit creuset, on réalise le broyage desdits déchets radioactifs, de préférence pour obtenir une granulométrie inférieure à 5 cm, de préférence encore inférieure à 1 cm, d'une partie au moins des particules qu'il contient, et obtenir une granulométrie inférieure à 5 cm, de préférence encore inférieure à 1 cm, d'une partie au moins des particules qu'il contient, et

- les fumées dégagées lors de la fusion des déchets radioactifs sont refroidies à moins de 200°C et les radioéléments gazeux tels que césium, qu'elles contiennent, sont piégés dans un filtre à particules.

D'autres caractéristiques et avantages de la présente invention apparaitront à la lumière de plusieurs exemples détaillés de réalisation, faits en référence aux figures 1 à 8, dans lesquelles :

les figures 1 à 3 représentent des diagrammes ternaires CAS, avec:

- la représentation du domaine A de la composition cible selon l'invention et le domaine B de la composition ternaire vitreuse du brevet FR 2 741 552, sur la figure 1, et

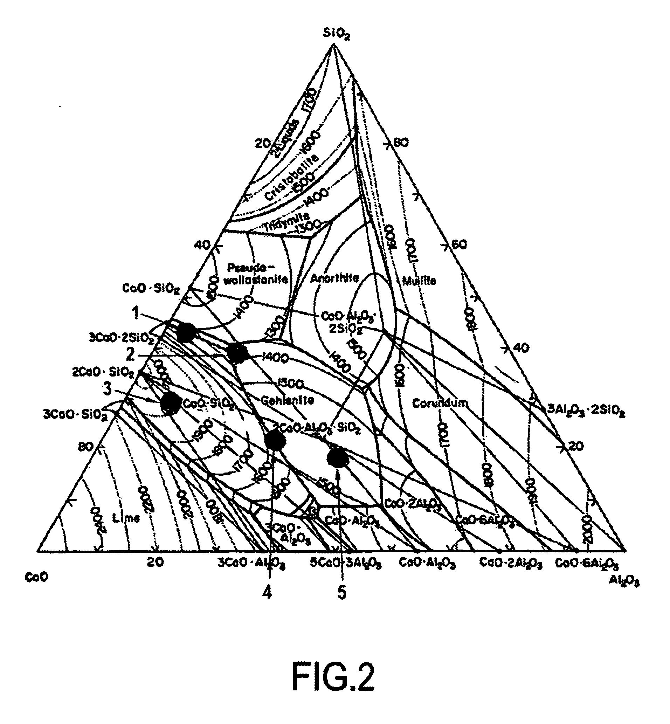

- la représentation de la composition de béton et terre traitée et roche artificielle obtenue, sur la figure 2, et

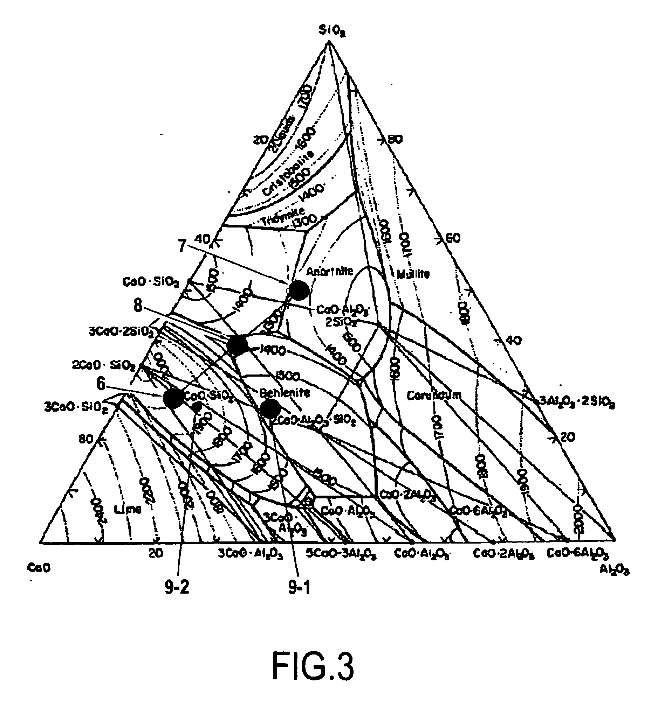

- l'indication des compositions de terre et de boue, ainsi que du mélange obtenu, sur la figure 3;

la figure 4 représente le diagramme ternaire chaux/hématite/silice;

la figure 5 représente le diagramme ternaire chaux/anhydride borique/silice;

les figures 6A à 6D représentent différentes étapes du procédé de chauffage dans un creuset refroidi;

la figure 7 représente un schéma d'installation de mise en oeuvre du procédé selon l'invention;

la figure 8 représente un schéma de diagramme ternaire CXS.

A- DÉCHETS TRAITÉS

Les déchets traités (terre calcaire, béton, boue), dans les exemples 1 à 9 ci-après, sont essentiellement constitués de carbonate de calcium ($CaCO_3$), silice ($SiO_2$), alumine ($Al_2O_3$) et hématite ($Fe_2O_3$). On indique, dans les tableaux suivants, les compositions moyennes des déchets dans un premier tableau, puis, dans un deuxième tableau, les pourcentages massiques des déchets $P_C$, $P_S$ et $P_X$, dans un système de diagramme ternaire $CaO/SiO_2/X_2O_3$, tel que défini précédemment, après calcination et application, le cas échéant, d'un coefficient d'équivalence hématite/alumine explicité

plus loin.

## 1/ Terre

| Composants | CaCO$_3$ | SiO$_2$ | Al$_2$O$_3$ | Fe$_2$O$_3$ | Autres minéraux | Humidité organiques |
|---|---|---|---|---|---|---|
| % massique terre | 67,5 | 17 | 4,5 | 1,3 | 1,7 | 8 |

| CaO | SiO$_2$ | X$_2$O$_3$ |
|---|---|---|
| P$_c$ =63,3% | P$_s$ =28,6% | P$_x$ =8,1% |

## 2/ Béton

| Composants | CaO | Al$_2$O$_3$ | Fe$_2$O$_3$ | SiO$_2$ | Autres minéraux | Humidité et organiques |
|---|---|---|---|---|---|---|
| % massique béton | 58,9 | 3 | 0,4 | 30,1 | 1,6 | 6 |

| CaO | SiO$_2$ | X$_2$O$_3$ |
|---|---|---|
| P$_c$ =53,9% | P$_s$ =41,7% | P$_x$ =4,4% |

## 3/ Boue

| Composants | CaCO$_3$ | SiO$_2$ | Al$_2$O$_3$ | Fe$_2$O$_3$ |
|---|---|---|---|---|
| % massique de la boue | 35 | 33 | 6 | 26 |

| CaO | SiO$_2$ | X$_2$O$_3$ |
|---|---|---|
| P$_c$ =30% | P$_s$ =50% | P$_x$ =20% |

B- PRINCIPE DE CALCUL DES PROPORTIONS

B.1- Effet de la calcination

Soit un déchet constitué à l'origine de :

| Composant | CaCO$_3$ | SiO$_2$ | Al$_2$O$_3$ | Autres minéraux | Humidité et organiques |
|---|---|---|---|---|---|
| Pourcentage massique | P'$_C$ | P'$_S$ | P'$_A$ | P'$_X$ | P'$_O$ |

Par définition : P'$_C$+P'$_S$+P'$_A$+P'$_X$+P'$_O$ = 100

La calcination a pour effets de vaporiser l'humidité, de brûler les organiques, et de transformer les carbonates (CaCO$_3$) en chaux (CaO) :

$$CaCO_3 \rightarrow CaO + CO_2$$

Si l'on considère un échantillon initial de 100 g, les P'$_C$ grammes de CaCO$_3$ deviennent P'$_C$/1,78 grammes de chaux (1,78 = rapport de la masse molaire du carbonate à celle de la chaux), et les P'$_O$ grammes d'humidité et d'organiques auront disparu.

Les masses molaires de CaO, SiO$_2$, Al$_2$O$_3$, B$_2$O$_3$ et Fe$_2$O$_3$ sont les suivantes : 1 mole de CaO = 56,1 g, 1 mole de SiO$_2$ = 60,1 g, 1 mole de Al$_2$O$_3$ = 102 g, 1 mole de B$_2$O$_3$ = 69,6 g et 1 mole de Fe$_2$O$_3$ = 159,7 g.

La masse de l'échantillon calciné, M$_1$, s'écrit donc:

$$M_1 = \frac{P'_C}{1,78} + P'_S + P'_A + P'_X$$

Et les pourcentages massiques des constituants du déchet calciné s'écrivent :

| Composant | CaO | SiO$_2$ | Al$_2$O$_3$ | Autres minéraux | Humidité et organiques |
|---|---|---|---|---|---|
| Pourcentage massique | $P_{C1} = \frac{100.P'_C}{1,78.M_1}$ | $P_{S1} = \frac{100.P'_S}{M_1}$ | $P_{A1} = \frac{100.P'_A}{M_1}$ | $P_{X1} = \frac{100.P'_X}{M_1}$ | 0 |

De cette manière, on a :

$$P_{C1} + P_{S1} + P_{A1} + P_{X1} = 100$$

La chaux vive (CaO) peut également être obtenue par calcination du plâtre (CaSO$_4$(H$_2$O)$_2$) ou de la chaux éteinte (Ca(OH)$_2$). Les rapports de masse moléculaires sont alors respectivement de 3,07 et 1,32, plutôt que 1,78 pour le carbonate.

B.2- Pourcentages du diagramme CAS

Pour situer la composition du déchet dans le diagramme CAS, on considère le déchet calciné, et on ne prend en compte que la chaux, l'alumine et la silice.

Dans les M$_1$ grammes de déchet calciné du paragraphe B.1-, on ne prend en compte qu'une partie M$_2$, s'écrivant :

$$M_2 = \frac{P'_C}{1,78} + P'_S + P'_A$$

Et les pourcentages massiques dans le diagramme CAS s'écrivent :

| Composant | CaO | SiO$_2$ | Al$_2$O$_3$ |
|---|---|---|---|
| Pourcentage massique | $P_C = \dfrac{100.P_C}{1,78.M_2}$ | $P_S = \dfrac{100.P_S}{M_2}$ | $P_A = \dfrac{100.P_A}{M_2}$ |

De cette manière, on a :

$$P_C + P_S + P_A = 100$$

B.3- Exemples de calculs des proportions

Les proportions en pourcentage massique pour la terre, utilisées dans les exemples, sont les suivantes :

| Composant | CaCO$_3$/CaO | SiO$_2$ | Al$_2$O$_3$ | Autres minéraux | Humidité et organiques |
|---|---|---|---|---|---|
| Composition terre crue | 67,5 | 17 | 4,5 | 3 | 8 |
| Après calcination | 60,7 | 27,3 | 7,2 | 4,8 | 0 |
| Pourcentages CAS | 63,8 | 28,6 | 7,6 | - | - |

Les proportions en pourcentage massique pour un béton, autre que celui utilisé dans les exemples mais qui a été testé, étaient les suivantes :

| Composant | CaCO$_3$/CaO | SiO$_2$ | Al$_2$O$_3$ | Autres minéraux | Humidité et organiques |
|---|---|---|---|---|---|
| Composition béton cru | 80,7 | 15,1 | 1,8 | 2,4 | 0 |
| Après calcination | 70,1 | 23,4 | 2,8 | 3,7 | 0 |
| Pourcentages CAS | 72,8 | 24,3 | 2,9 | - | - |

B.4- Coefficient d'équivalence alumine pour l'hématite et l'oxyde de bore

Initialement, on a traité de la terre et du béton en y ajoutant exclusivement de l'alumine, seule.
Puis, on a testé le remplacement de l'alumine par d'autres oxydes trivalents, à savoir Fe$_2$O$_3$ et B$_2$O$_3$.
On a constaté que l'alumine peut être substituée en totalité ou en partie par de l'hématite ou de l'anhydride borique ou par des précurseurs se transformant en ces molécules lors de la calcination, de manière à conserver une similitude entre les propriétés des différents oxydes utilisés, en comptabilisant, dans le mélange final, une masse d'alumine totale égale à la masse d'alumine réelle à laquelle on ajoute 0,28 fois la masse d'hématite et 2 fois la masse d'anhydride borique.
Ces coefficients d'équivalence, 0,28 et 2, ne résultent pas simplement d'une constatation empirique, mais ont été déterminés à partir de la comparaison au diagramme CAS des diagrammes ternaires chaux/hématite/silice et chaux/anhydride borique/silice.
Sur les trois diagrammes on constate en effet qu'un ensemble relativement rectiligne de vallées eutectiques (A (figure 1) et 9-10 (figures 4-5)) rejoint le point M de la ligne CaO-SiO$_2$ à un point P de la ligne CaO-X$_2$O$_3$ (où X$_2$O$_3$ est l'oxyde trivalent), comme schématisé sur la figure 8.
La position du point M ne dépend pas de la nature de l'oxyde trivalent, et se situe dans le domaine de la rankinite. La comparaison des positions du point P pour les différents oxydes trivalents permet de déterminer ces coefficients d'équivalence.
Comme pour le cas de l'alumine, si on déséquilibre la composition pour s'éloigner de l'eutectique, la température de fusion augmente vite à gauche de la vallée (excès de chaux), et doucement à droite de la vallée (déficit de chaux).
La position du point P définit $p_x$, $p_x$ étant le pourcentage en masse de X$_2$O$_3$ dans un mélange binaire CaO - X$_2$O$_3$. Ces valeurs de $p_x$ ont été déterminées graphiquement sur les diagrammes ternaires, en prenant un point milieu approximatif lorsque les vallées eutectiques se ramifient vers la ligne CaO/X$_2$O$_3$ (cas de X=Fe et X=Al) :

| Oxyde trivalent | $Al_2O_3$ | $Fe_2O_3$ | $B_2O_3$ |
|---|---|---|---|
| % $p_x$ | 53 | 80 | 36 |

Les coefficients d'équivalence sont définis de telle manière qu'en comptabilisant, dans un mélange binaire ou ternaire, la masse de $X_2O_3$ par la masse réelle multipliée par ce coefficient d'équivalence, le point P du diagramme CXS se superpose au point P du diagramme CAS.

Dans ce qui suit :

- $p_x$ est la proportion massique réelle de l'oxyde trivalent $X_2O_3$ dans le mélange $CaO/X_2O_3$ correspondant à la position du point P dans le diagramme CXS,

- $p_A$ est la proportion massique réelle d'$Al_2O_3$ dans le mélange $CaO/Al_2O_3$ correspondant à la position du point P dans le diagramme CAS,

- $k_x$ est le coefficient d'équivalence.

1 gramme de mélange binaire, correspondant à P, contient $p_x$ grammes de $X_2O_3$ et $(1-p_x)$ grammes de CaO.

Par application du coefficient d'équivalence, ce mélange est supposé équivalent à un mélange de $k.p_x$ grammes d'$Al_2O_3$ et $(1-p_x)$ grammes de CaO.

Les proportions dans ce mélange équivalent sont $\dfrac{k.p_x}{k.p_x + 1 - p_x}$ d'$Al_2O_3$ et $\dfrac{1 - p_x}{k.p_x + 1 - p_x}$ de CaO.

On recherche k de telle manière que la proportion d'$Al_2O_3$ soit égale à $p_A$ :

$$\frac{k.p_x}{k.p_x + 1 - p_x} = p_A \Leftrightarrow k = \frac{p_A.(1 - p_x)}{p_x.(1 - p_A)}$$

Les coefficients d'équivalence ainsi déterminés sont de 2 pour $B_2O_3$ et 0,28 pour $Fe_2O_3$. Les données expérimentales ont validé ces coefficients d'équivalence.

C- PROTOCOLE DES EXEMPLES 1 A 12

Le procédé de conditionnement de déchets toxiques dans une roche artificielle, un verre ou un solide vitrocristallin, comprenait les étapes successives de :

- analyse du ou des déchets,

- ajustement de la composition par ajout d'additifs, de manière à ce que la composition finale soit dans le domaine cible,

- le cas échéant, mélange de déchets de manière à entrer dans le domaine de départ défini ci-dessus,

- lorsque la composition finale comprend plus de 10% d'anhydride borique, calcination séparée des composants susceptibles de se décomposer à température supérieure à 300°C,

- fusion de l'ensemble à une température comprise entre 1 250 et 1 650°C (les températures inférieures à 1 550°C étant obtenues avec des concentrations d'oxyde de bore supérieures à 3%)

- coulée du liquide en fusion dans une lingotière perdue ou réutilisable,

- obtention d'un monolithe après refroidissement sans recuit, en quelques heures à 15 jours, selon la taille du monolithe.

Pour les essais en laboratoire des exemples 1 à 9, on a chauffé les déchets à traiter dans un creuset sacrificiel en alumine, placé dans un four, ce creuset permettant un ajustement automatique de la composition du déchet final.

En revanche, pour les essais industriels des exemples 10 à 12, on a réalisé un chauffage par effet Joule, avec des électrodes en graphite plongées dans un creuset à base de graphite. On pourrait utiliser un creuset en tout autre matière réfractaire et inerte vis-à-vis des laves produites.

Cette technique de chauffage par effet Joule est préférée à la technique de chauffage par la torche à plasma car il faut fondre une quantité importante de déchets, avec un objectif industriel de robustesse et de cadence.

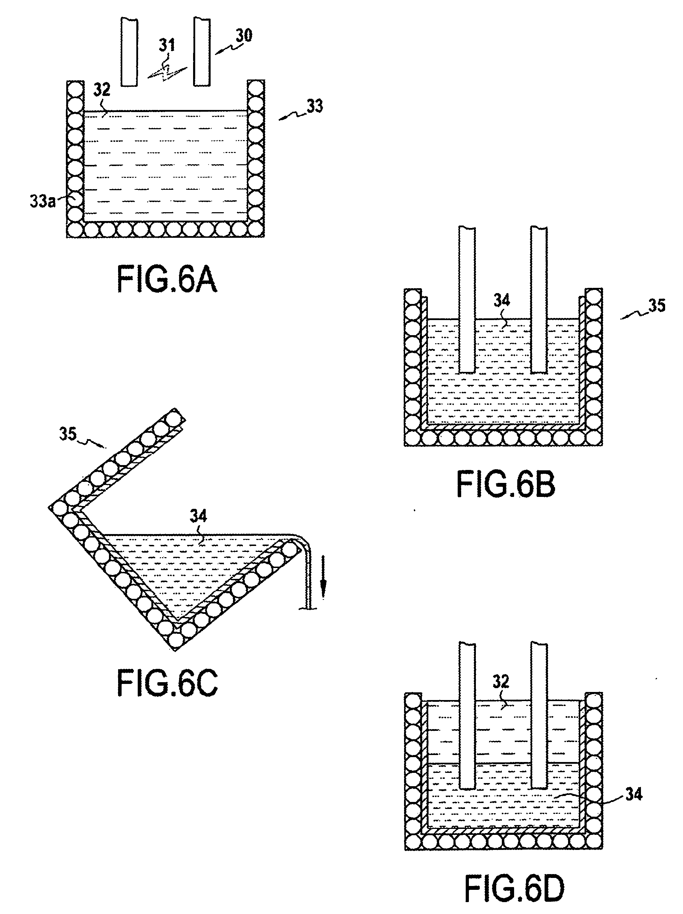

Sur le schéma des figures 6A à 6D, les électrodes de graphite 30 (figure 6A) (habituellement au nombre de 3) chauffent le matériau solide 32 par rayonnement à partir d'un arc 31 entre les électrodes, puis plongent dans le bain 34 (figure 6B) pour entretenir la fusion par effet Joule. Selon la matière constituant le déchet initial, il est également possible de commencer la chauffe en plongeant les électrodes dans la charge. Les électrodes sont motorisées de manière à pouvoir les monter ou les baisser.

L'effet Joule étant plus efficace que le chauffage par rayonnement, il est intéressant de fonctionner en semi-continu, avec un bain de volume plus important que celui du lingot 26 (figure 7), de manière à toujours garder un bain en fusion dans le creuset 33. Le creuset refroidi 33 est constitué de tuyaux jointifs 33a délimitant une cavité. On fait circuler de l'eau dans les tuyaux afin que la couche la plus externe du déchet se solidifie. La couche solide 35 ainsi créée protège le creuset de la corrosion. Les électrodes 30 se consomment petit à petit. Cette consommation représente au maximum 1% de la masse du déchet traité, et ne diminue donc pas significativement le taux d'incorporation. Ce principe de four est utilisé industriellement pour la fusion des métaux et pour la production de céramiques. Le principe de chauffage par arc et effet Joule est également connu.

Sur la figure 7, on a représenté une installation avec les équipements en amont et les équipements en aval du four 15.

Avant d'injecter les déchets 10 dans le four 15, il faut :

- les sécher 14, le cas échéant,

- les broyer 11, si nécessaire, pour obtenir une granulométrie inférieure à 5 cm, typiquement. Dans certains cas, notamment celui de la terre contaminée, il peut être économiquement intéressant de séparer les grosses pour les évacuer en déchet TFA (très faiblement actif), catégorie inférieure aux FA/MA, et moins onéreuse,

- réaliser le mélange avec les adjuvants 12.

Les équipements en aval comprennent des lingotières 26 et un local 27 permettant le refroidissement. Le local 27 doit être dimensionné en fonction du flux de déchets traités, et de la durée de refroidissement, une semaine maximum.

Le mode de conditionnement final préféré est le fût métallique, en tant que lingotière "perdue". Le bain fondu est directement coulé dans le fût. Le fût est enfoui dans un sable d'alumine afin de limiter la vitesse de refroidissement. Après refroidissement, le chargement du fût est complété par du mortier 28, si nécessaire, le fût est peint et fermé, puis évacué. Les déchets plus actifs sont conditionnés dans d'autres emballages tels que caissons ou coques béton. Dans ce cas, le bain fondu est coulé en lingotières de dimensions et formes adaptées au conditionnement final, de manière à ne pas y laisser de vides. Les lingots 26 sont démoulés quelques minutes après la coulée, puis, comme les fûts, sont enfouis dans un sable d'alumine pour refroidissement.

Selon la nature du déchet, les fumées 17 contiennent, outre de l'azote et de l'oxygène, eau, $CO_2$, CO, COV (composés organiques volatils), SOx, NOx et poussières. La radioactivité, sauf cas très particuliers (tritium et $^{14}$C), est portée par les poussières et, partiellement, sous forme gazeuse (isotopes de l'iode, du césium et du ruthénium). Une forte teneur en COV et CO (provenant d'une forte teneur en produits organiques dans les déchets) nécessiterait une postcombustion (non représentée sur le schéma).

L'étape suivante est un refroidissement 18 des fumées à moins de 200°C, de manière à ce que les radioéléments gazeux (césium, ruthénium) repassent sous forme particulaire, et soient piégés dans le filtre à particule 19.

En l'absence de radioéléments particuliers (tritium, $^{14}$C, iodes), le gaz après filtration 19 peut être considéré comme non radioactif. Il subit un lavage à l'eau 22 dans une colonne de lavage 20 pour abattre les NOx et les SOx. Le gaz 21 est contrôlé, puis rejeté à l'atmosphère.

L'abattage complet des NOx nécessite en complément un dispositif particulier, connu dans l'industrie, dans lequel ces NOx sont réduits en di-azote par de l'ammoniac.

Lorsque la solution de lavage des gaz est saturée, elle est évaporée et cristallisée. La vapeur d'eau 22 est condensée pour être réutilisée comme solution de lavage. Les sels 23 25 (nitrates, sulfates, carbonates) constituent un déchet qui, selon la réglementation et la nature de la radioactivité du déchet entrant, sera considéré comme déchet industriel spécial ou déchet radioactif TFA.

Pour des raisons pratiques, certains essais réalisés l'ont été dans un creuset sacrificiel en alumine, le bain fondu incorpore alors de l'alumine du creuset, jusqu'à trouver un équilibre à la température qui lui est imposée.

Par ailleurs, les produits crus (terre et béton) sont très hétérogène, ce qui rend difficile la détermination de leur composition. On a donc effectués en complément les analyses des produits cuits, en vérifiant les facteurs de perte au feu déterminés indépendamment, par analyse thermogravimétrique.

Les essais des exemples 1 à 9 ont été réalisés à petite échelle (100 g), les échantillons ayant été finement broyés (granulométrie inférieure au cm). D'autres essais des exemples 1 à 9 ont été réalisés à plus grande échelle (2 kg), avec une granulométrie atteignant le cm. Les essais des exemples 10 à 12 ont été réalisés à l'échelle industrielle (200 kg par coulée). A cette échelle, on peut tolérer une granulométrie pouvant atteindre 5 cm, voire 10 cm.

D- EXEMPLES 1 A 9

Dans les exemples 1 à 9, on a visé un domaine cible défini autour de la vallée eutectique séparant la géhlénite ($Ca_2Al_2SiO_7$) de la larnite ($Ca_2SiO_4$) dans le diagramme CAS, avec :

- 50% > $P_C$ > 35%, et

- 40% > $P_S$ > 20%,

Les températures de fusion thermodynamiques dans cette vallée vont d'un peu moins de 1 400°C à un peu plus de 1 500°C dans le diagramme CAS.

Dans les tableaux des exemples 1 à 12 suivants, les compositions des produits de départ crus et des produits après cuisson sont des pourcentages en masse, avec :

- (1) = $CaCO_3$ pour la terre crue, CaO pour le produit cuit

- (2) = $Al_2O_3$ pour les lignes 1 et 3 des tableaux

- (3) = $X_2O_3$ (proportion d'équivalent en $Al_2O_3$) pour la dernière ligne "proportions CXS" dans un système ternaire $P_C + P_S + P_X = 100\%$

Dans les tableaux des exemples 1 à 9 suivants, on donne, dans la ligne "proportions CXS", les valeurs de $P_C$, $P_X$, $P_S$, respectivement dans les colonnes $CaCO_3$/CaO, $Al_2O_3$/$X_2O_3$, $Fe_2O_3$ et $SiO_2$, tel que défini ci-dessus avec :

- $P_C + P_S + P_X = 100\%$, et

- $P_X = P_A + P_B + P_H$.

Le taux d'incorporation d'un matériau de déchets donné est le volume du monolithe obtenu divisé par le volume dudit matériau.

Dans la dernière colonne des tableaux, le terme "orga" signifie "composés organiques".

Exemple 1 (figure 2)

| Terre + 20 % d'alumine (référence 4, figure 2) | | | | | | |
|---|---|---|---|---|---|---|
| Composant | $CaCO_3$ CaO(1) | $Al_2O_3$ (2) $X_2O_3$ (3) | $Fe_2O_3$ | $SiO_2$ | Autres minéraux | $SiO_2$ et orga. |
| Composition terre crue (%) | 67,5 | 4,5 | 1,3 | 17,1 | 1,4 | 8,2 |
| Ajout (% en masse du cru) | | 20 | | | | |
| Composition terre cuite (%) | 46,1 | 29,8 | 1,6 | 20,8 | 1,7 | - |
| Proportions CXS terre cuite (%) | 47,5 | 31,1 | | 21,4 | - | - |
| Température de fusion (°C, constatée) | | | | | | 1620 |
| Taux d'incorporation de terre (l'alumine ajoutée est un produit frais) | | | | | | 3,0 |

(suite)

| Terre + 20 % d'alumine (référence 4, figure 2) | | | | | | |
|---|---|---|---|---|---|---|
| Composant | CaCO$_3$ CaO(1) | Al$_2$O$_3$ (2) X$_2$O$_3$ (3) | Fe$_2$O$_3$ | SiO$_2$ | Autres minéraux | SiO$_2$ et orga. |
| Taux d'incorporation des terre + Al$_2$O$_3$ (l'alumine ajoutée provient d'un déchet radioactif) | | | | | | 3,6 |

L'ajustement de composition a été automatique, par digestion du creuset en alumine. La composition du produit cuit est sur la vallée eutectique géhlénite/larnite (voir figure 2, référence 4).

On a constaté, lors des essais suivants sur la terre avec ajout d'alumine et hématite ou avec ajout d'alumine et anhydride borique, que la proportion d'équivalent alumine (X$_2$O$_3$ dans le mélange CXS) reste voisine de cette proportion d'équilibre (31,1%), ce qui justifie expérimentalement la notion d'équivalence à l'alumine.

Exemple 2 (figure 2)

| Terre + 35 % d'alumine (référence 5, figure 2) | | | | | | |
|---|---|---|---|---|---|---|
| Composant | CaCO$_3$ CaO(1) | Al$_2$O$_3$ (2) X$_2$O$_3$ (3) | Fe$_2$O$_3$ | SiO$_2$ | Autres minéraux | H$_2$O et orga. |
| Composition terre crue (%) | 67,5 | 4,5 | 1,3 | 17,1 | 1,4 | 8,2 |
| Ajout (% en masse du cru) | | 35 | | | | |
| Composition terre cuite (%) | 39,0 | 40,6 | 1,4 | 17,6 | 1,4 | - |
| Proportions CXS terre cuite (%) | 39,9 | 42,0 | | 18,0 | - | - |
| Température de fusion (°C, constatée) | | | | | | 1600 |
| Taux d'incorporation de terre (l'alumine ajoutée est un produit frais) | | | | | | 3,0 |
| Taux d'incorporation des terre + Al$_2$O$_3$ (l'alumine ajoutée provient d'un déchet radioactif) | | | | | | 3,6 |

On a réalisé beaucoup d'essais autour de cette composition, afin d'éviter la corrosion du creuset. La composition du cuit est à peu près au milieu du le domaine de la géhlénite. La vallée eutectique a un flanc très peu pentu, lorsque l'on quitte cette vallée pour s'avancer dans le domaine de la géhlénite. La température de fusion théorique n'augmente pas significativement.

Par contre, l'excès d'alumine diminue la viscosité, ce qui diminue la température de fusion effective.

Exemple 3

| Béton + 10 % d'alumine (référence 2, figure 2) | | | | | | |
|---|---|---|---|---|---|---|
| Composant | CaO (1) | Al$_2$O$_3$ (2) X$_2$O$_3$(3) | Fe$_2$O$_3$ | SiO$_2$ | Autres minéraux | H$_2$O et orga. |
| Composition béton cru (%) | 58,9 | 3,0 | 0,4 | 30,1 | 1,6 | 6,0 |
| Ajout (% en masse du cru) | | 10 | | | | |
| Composition béton cuit (%) | 46,3 | 15,5 | 0,5 | 35,8 | 1,9 | - |
| Proportions CXS béton cuit (%) | 47,4 | 16,0 | | 36,6 | - | - |
| Température de fusion (°C, constatée) | | | | | | 1620 |
| Taux d'incorporation de terre (l'alumine ajoutée est un produit frais) | | | | | | 4,0 |

(suite)

| Béton + 10 % d'alumine (référence 2, figure 2) | | | | | | |
|---|---|---|---|---|---|---|
| Composant | CaO (1) | $Al_2O_3$ (2) $X_2O_3$(3) | $Fe_2O_3$ | $SiO_2$ | Autres minéraux | $H_2O$ et orga. |
| Taux d'incorporation des terre + $Al_2O_3$ (l'alumine ajoutée provient d'un déchet radioactif) | | | | | | 4,3 |
| (1) : pour ce qui concerne le béton cru, il s'agit en fait d'un mélange de chaux plus ou moins hydratée ($CaO(H_2O)$ n) et de carbonate ($CaCO_3$). | | | | | | |

La composition du béton cru (référence 1, figure 2) est proche du domaine de la rankinite. La composition du béton cuit (référence 2, figure 2) est proche de l'intersection entre les 4 domaines : rankinite, pseudo-wollastonite, géhlénite, larnite.

Exemple 4

| Terre + 20 % d'alumine + 20 % d'hématite | | | | | | |
|---|---|---|---|---|---|---|
| Composant | $CaCO_3$ CaO (1) | $Al_2O_3$ (2) $X_2O_3$ (3) | $Fe_2O_3$ | $SiO_2$ | Autres minéraux | $H_2O$ et orga. |
| Composition terre crue (%) | 67,5 | 4,5 | 1,3 | 17,1 | 1,4 | 8,2 |
| Ajout (% en masse du cru) | | 20 | 20 | | | |
| Composition terre cuite (%) | 37,1 | 24,0 | 20,9 | 16,7 | 1,4 | - |
| Proportions CXS terre cuite (%) | 44,3 | 35,7 | | 20,0 | - | - |
| Température de fusion (°C, constatée) | | | | | | 1550 |
| Taux d'incorporation de terre (l'alumine et l'hématite ajoutées sont des produits frais) | | | | | | 2,4 |
| Taux d'incorporation des terre + $Fe_2O_3$ (l'alumine ajoutée est un produit frais) | | | | | | 2,7 |
| Taux d'incorporation des terre + $Al_2O_3$ (les ajouts proviennent de déchets radioactifs) | | | | | | 3,2 |

Exemple 5

| Terre + 10 % d'alumine + 30 % d'hématite | | | | | | |
|---|---|---|---|---|---|---|
| Composant | $CaCO_3$ CaO (1) | $Al_2O_3$ (2) $X_2O_3$ (3) | $Fe_2O_3$ | $SiO_2$ | Autres minéraux | $H_2O$ et orga. |
| Composition terre crue (%) | 67,5 | 4,5 | 1,3 | 17,1 | 1,4 | 8,2 |
| Ajout (% en masse du cru) | | 10 | 30 | | | |
| Composition terre cuite (%) | 37,1 | 14,2 | 30,7 | 16,7 | 1,4 | - |
| Proportions CXS terre cuite (%) | 48,4 | 29,8 | | 21,8 | - | - |
| Température de fusion (°C, constatée) | | | | | | 1510 |
| Taux d'incorporation de terre (l'alumine et l'hématite ajoutées sont des produits frais) | | | | | | 2,4 |
| Taux d'incorporation des terre + $Fe_2O_3$ (l'alumine ajoutée est un produit frais) | | | | | | 2,8 |
| Taux d'incorporation des terre+$Al_2O_3$+$Fe_2O_3$ (les ajouts viennent de déchets radioactifs) | | | | | | 3,1 |

Exemple 6

| Terre + 15 % d'alumine + 2,5 % d'anhydride borique | | | | | | | |
|---|---|---|---|---|---|---|---|
| Composant | CaCO$_3$ CaO(1) | Al$_2$O$_3$ (2) X$_2$O$_3$ (3) | Fe$_2$O$_3$ | B$_2$O$_3$ | SiO$_2$ | Autres minéraux | H$_2$O et orga. |
| Composition terre crue (%) | 67,5 | 4,5 | 1,3 | | 17,1 | 1,4 | 8,2 |
| Ajout (% en masse du cru) | | 15 | | 2,5 | | | |
| Composition terre cuite (%) | 47,5 | 24,5 | 1,7 | 3,1 | 21,5 | 1,8 | - |
| Proportions CXS terre cuite (%) | 47,4 | 31,1 | | | 21,4 | - | - |
| Température de fusion (°C, constatée) | | | | | | | 1550 |
| Taux d'incorporation de terre (l'alumine et l'hématite ajoutées sont des produits frais) | | | | | | | 3,1 |
| Taux d'incorporation des terre + B$_2$O$_3$ (l'alumine ajoutée est un produit frais) | | | | | | | 3,2 |
| Taux d'incorporation des terre+Al$_2$O$_3$+B$_2$O$_3$ (les ajouts proviennent de déchets radioactifs) | | | | | | | 3,7 |

Exemple 7

| Terre + 10 % d'anhydride borique | | | | | | | |
|---|---|---|---|---|---|---|---|
| Composant | CaCO$_3$ CaO (1) | Al$_2$O$_3$ (2) X$_2$O$_3$ (3) | Fe$_2$O$_3$ | B$_2$O$_3$ | SiO$_2$ | Autres minéraux | H$_2$O et orga. |
| Composition terre crue (%) | 67,5 | 4,5 | 1,3 | | 17,1 | 1,4 | 8,2 |
| Ajout (% en masse du cru) | | | | 10 | | | |
| Composition terre cuite (%) | 52,5 | 6,2 | 1,8 | 13,9 | 23,7 | 1,9 | - |
| Proportions CXS terre cuite (%) | 47,4 | 31,2 | | | 21,4 | - | - |
| Température de fusion (°C, constatée) | | | | | | | 1250 |
| Taux d'incorporation de terre (B$_2$O$_3$ ajouté est un produit frais) | | | | | | | 3,4 |
| Taux d'incorporation des terre + B$_2$O$_3$ (B$_2$O$_3$ provient d'un déchet radioactif) | | | | | | | 3,8 |

On remarquera la très faible température de fusion. Ce mélange est le plus concentré en bore qui ne produit pas de mousse.

L'incorporation d'oxyde de bore étant en quantités supérieures à 5%, pour éviter ou réduire la production de mousse, il faut calciner les carbonates avant d'incorporer l'oxyde de bore, soit séquentiellement dans un four unique, soit en utilisant un four dédié à la calcination (autour de 950°C).

Exemple 8 (figure 3)

| 50 % terre + 50 % boue (boue simulée) | | | | | | |
|---|---|---|---|---|---|---|
| Composant | $CaCO_3$ $CaO$ (1) | $Al_2O_3$ (2) $X_2O_3$ (3) | $Fe_2O_3$ | $SiO_2$ | Autres minéraux | $H_2O$ et orga. |
| Composition terre crue (%) | 67,5 | 4,5 | 1,3 | 17,1 | 1,4 | 8,2 |
| Ajout (% en masse de la boue crue) | 35 | 6 | 26 | 33 | | |
| Composition du mélange cuit (%) | 39,2 | 7,1 | 18,6 | 34,1 | 1,0 | - |
| Proportions CXS du mélange cuit (%) | 45,7 | 14,5 | | 39,8 | - | - |
| Température de fusion (°C, constatée) | | | | | | 1400 |
| Taux d'incorporation de terre | | | | | | 1,7 |
| Taux d'incorporation des terre + boue | | | | | | 3,5 |

La composition de la terre crue est montrée en référence 6, figure 3, et celle de la boue crue en référence 7, figure 3.

On constate que la composition du mélange 50/50 de boue et terre cuit (référence 8, figure 3) entre dans le domaine cible défini ci-dessus.

Exemple 9

| Fraction fine de la terre : granulométrie inférieure à 1 cm (50 % de la masse initiale) | | | | | | |
|---|---|---|---|---|---|---|
| Composant | $CaCO_3$ $CaO$ (1) | $Al_2O_3$ (2) $X_2O_3$ (3) | $Fe_2O_3$ | $SiO_2$ | Autres minéraux | $H_2O$ et orga. |
| Composition terre crue (%) | 67,5 | 4,5 | 1,3 | 17,1 | 1,4 | 8,2 |
| Ajout (% en masse de la terre crue) | -41,7 | -1,3 | -0,4 | -5,9 | -0,7 | |
| Composition du mélange cuit (%) | 47,7 | 10,3 | 3,1 | 36,8 | 2,4 | - |
| Proportions CXS du mélange cuit (%) | 49,8 | 11,7 | | 38,5 | - | - |
| Température de fusion (°C, constatée) | | | | | | 1530 |
| Taux d'incorporation | | | | | | 8,1 |

Les "ajouts" sont négatifs parce que l'on a retiré une partie de la matière initiale.

Le taux d'incorporation très élevé (8,1) tient au fait que les grosses particules, supposées TFA, représentent un coût déchet négligeable par rapport au produit final FA.

Les proportions CXS du produit final sont très voisines de celles correspondant au béton + 10% Al (référence 2, figure 2) et au mélange 50/50 terre/boue cuit (référence 8, figure 3).

E- Analyses des résultats des exemples 1 à 9

Les essais ci-dessus montrent que l'ajout concerté d'alumine, de manière à atteindre la vallée eutectique séparant la géhlénite ($Ca_2Al_2SiO_7$) de la larnite ($Ca_2SiO_4$) dans le diagramme ternaire CAS (Chaux, Alumine, Silice), réduit à la fois la température de fusion et la corrosivité du bain en fusion.

Les essais réalisés montrent que les régions des vallées eutectiques sélectionnées présentent des caractéristiques intéressantes pour la fusion des déchets : température de fusion effective raisonnable (inférieure à 1 650°C) et faible viscosité du bain. La faible viscosité est attribuée à la forte proportion de chaux. Cette faible viscosité diminue l'écart entre température de fusion effective et température de fusion thermodynamique. L'écart constaté sur terre + alumine est de 70°C, celui constaté sur béton + alumine (contenu en chaux plus faible) est de 270°C. Par comparaison, pour un verre E (figure 1), tel que visé dans FR 2 741 552, l'écart peut dépasser 500°C, ce qui diminue fortement l'intérêt de travailler autour du point le bas du diagramme CAS (1 170°C).

Les essais ont démontré que 50 % du césium initialement présent dans le déchet reste capté dans le monolithe obtenu selon la présente invention, même avec des températures de fusion de 1 650°C.

Par ailleurs, la faible viscosité permet une homogénéisation rapide du bain en fusion, ce qui facilite le refroidissement du monolithe.

Selon la présente invention, on obtient des blocs monolithiques de plusieurs kilogrammes avec un refroidissement de quelques heures, sans aucune fissure, ni, à plus forte raison, éclatement. Des essais ont été réalisés à échelle industrielle (monolithe de 500 kg), avec une durée de refroidissement de 24 heures seulement.

On préfère obtenir un solide polycristallin plutôt qu'un verre. Un solide polycristallin ou roche artificielle est plus apte à ne pas fissurer malgré un refroidissement rapide. Les conditions pour obtenir un tel état du produit final sont une composition s'écartant légèrement de l'eutectique, de préférence dans le domaine de la géhlénite, et une vitesse de refroidissement maîtrisée jusqu'à 1 000°C.

En effet, pour obtenir un matériau polycristallin, il faut d'une part viser une composition proche, mais différente de l'eutectique, d'autre part réduire la vitesse de refroidissement autour de la température de cristallisation. Il est plus facile de placer la cible dans le domaine de la géhlénite (excès d'alumine dans la terre) que dans celui de la larnite (manque d'alumine dans la terre). En effet, la température de fusion augmente très vite lorsque l'on s'éloigne de l'eutectique pour aller dans le domaine de la larnite, alors qu'elle augmente très lentement dans le domaine de la géhlénite.

Un verre est moins favorable qu'un solide polycristallin, mais peut aussi être envisagé compte-tenu de la bonne homogénéité du bain. La durée de refroidissement devra alors être augmentée (une semaine).

Les essais ont montré qu'un bain fondu mal équilibré, c'est-à-dire dont la composition est trop éloignée d'un eutectique, est très avide d'alumine. Couplé à la faible viscosité, cette caractéristique permet un auto-ajustement de la composition. Il suffit d'utiliser un creuset sacrificiel ou des blocs d'alumine dans le bain pour que la composition s'ajuste d'elle-même à celle de la vallée eutectique la plus proche, en quelques minutes, par composition du creuset.

On a constaté que la cristallisation du matériau cible se produit lors du refroidissement entre 1 250 et 1 000°C. Une vitesse de refroidissement relativement lente jusqu'à 1 000°C (de l'ordre de l'heure) déclenche la cristallisation. Une fois cristallisé, le matériau supporte un refroidissement très rapide (moins de 24 heures) jusqu'à température ambiante, sans développer de fissure.

Le profil de refroidissement désiré s'obtient en enfouissant le lingot fraîchement coulé dans un lit d'alumine en poudre (ou autre matériau réfractaire présentant une conductivité thermique similaire), et en laissant refroidir l'ensemble naturellement dans un local à température ambiante pendant quelques heures. En-deçà de 1 000°C, on peut accélérer le refroidissement en sortant le lingot de son lit d'alumine (trempe à l'air), voire en le trempant dans l'eau. Un verre devra être laissé dans son lit d'alumine pendant toute la durée du refroidissement.

L'ajout d'alumine non radioactive, acheté dans le commerce, dans le but d'ajuster la composition, dégrade le taux d'incorporation. Il est donc préférable d'ajuster la composition en mélangeant des déchets radioactifs, notamment de l'alumine radioactive, des boues d'épuration d'effluents de centrales nucléaires, le taux d'incorporation étant alors maximal.

Les températures de fusion des diagrammes ternaires avec hématite et anhydride borique sont significativement plus basses, ce qui est favorable, et est corroboré par les résultats expérimentaux, surtout en présence d'anhydride borique.

Pour ce qui concerne les déchets étudiés (terre et béton), les compositions de la vallée eutectique larnite/géhlénite se rapprochent beaucoup plus de celles du déchet initial que l'eutectique E: Cette vallée est atteinte en ajoutant 20% en masse d'alumine à la terre, alors qu'il faudrait ajouter 25% d'alumine et 129% de silice pour atteindre l'eutectique E. Pour un déchet initial de densité apparente 1,1, le taux d'incorporation est alors de 3,0 dans la vallée, au lieu de 1,6 pour l'eutectique E.

Les essais réalisés ont montré que la terre, dont les pierres ont été préalablement extraites (granulométrie supérieure à 1 cm, représentant 50 % de la masse initiale), fond à 1 530°C, sans ajout d'alumine. Le tri granulométrique, complété si besoin d'un lavage à l'eau, permet de déclasser les pierres de la catégorie FA (faiblement actif), en TFA (très faiblement actif). Cette dernière catégorie de déchets nécessite un conditionnement moins rigoureux que les déchets FA (mise en big-bag, sans immobilisation) et le coût de prise en charge est plus faible. La séparation granulométrique des pierres, notamment lors du traitement d'une terre calcaire, permet non seulement de réduire le volume de déchet à traiter, mais également de réaliser un ajustement de composition favorable.

L'anhydride borique, considéré précédemment comme remplaçant de l'alumine, peut être également considéré comme agent fondant (dans le but de diminuer la température de fusion). En tant qu'agent fondant, on se limitera pratiquement à des ajouts inférieurs à 10%. Au-delà, les problèmes de mousse apparaissent. La soude est également un agent fondant connu. A proportion égale, son effet est moins fort que celui de l'anhydride borique.

L'enrichissement en silice permet d'atteindre d'autres vallées eutectiques (larnite/rankinite, rankinite/pseudo-wollastonite, pseudo-wollastonite/géhlénite, point triple pseudo-wollastonite/géhlénite/anorthite) aussi vite que l'enrichissement en alumine permet d'atteindre la vallée entre géhlénite et larnite.

Les vallées eutectiques pauvres en silice, autour des composés $3CaO.Al_2O_3$, $5CaO.3Al_2O_3$, $CaO.Al_2O_3$, $CaO.2Al_2O_3$ concernent des déchets de composition binaire ($CaO$ et $Al_2O_3$), alors que la présente invention concerne des compositions ternaires. Mais le comportement du mélange est vraisemblablement voisin de celui des mélanges étudiés.

F- Essais industriels (exemples 10 à 12)

On a réalisé le chauffage des déchets par effet Joule, en plongeant des électrodes de graphite dans les déchets, comme décrit précédemment.

Il ressort des exemples ci-après qu'en présence du graphite des électrodes, les oxydes de fer se réduisent en fer métallique, selon les mêmes réactions chimiques que celles se produisant dans un haut fourneau, lorsque l'on chauffe du minerai de fer en présence de charbon.

Le bain en fusion se sépare alors en 2 phases, l'une constituée de la roche synthétique de composition cible selon l'invention dans laquelle $X_2O_3$ est $Al_2O_3$, l'autre de fonte (fer+carbone); après solidification, on retrouve le fer sous forme de petites inclusions métalliques de taille inférieure à 2 cm dans la roche synthétique.

Le bloc refroidi n'en constitue pas moins un déchet conditionné acceptable par un centre de stockage de déchets radioactifs en surface. Pour les déchets testés (avec moins de 5% d'oxydes de fer, comme à l'exemple 11), la consommation d'électrodes en graphite qui en résulte est négligeable (moins de 1% de la masse traitée).

Pour des déchets plus chargés en fer (cf. exemple 12) ou oxydes de fer (cf. exemple 10), il peut être intéressant de favoriser ce comportement biphasique, notamment en ajoutant du carbone (noir de carbone, graphite en poudre, charbon) en proportion stoechiométrique avec l'oxyde de fer, de manière à éviter ou réduire la consommation d'électrodes. Le déchet final est plus compact, parce que la réduction de l'oxyde en métal libère de la masse sous forme de $CO_2$ gazeux, mais surtout parce que la fonte est plus dense que la roche synthétique (7 000 $kg/m^3$ contre 2 700 $kg/m^3$).

Les déchets concernés sont, en particulier, les boues (cf. exemple 10), les bétons ferraillés (cf. exemple 12).

Toutefois, si l'on veut éviter la réduction des oxydes de fer par le graphite des électrodes, il suffit de faire fonctionner le four en arc, c'est-à-dire sans plonger les électrodes dans le bain en fusion (électrodes au dessus du bain). Dans ce cas, on peut éviter la ségrégation de fonte métallique et conserver la participation des oxydes de fer à ladite composition cible. il reste que les électrodes se consomment quand même par émission de $CO_2$, même si elles ne modifient pas les caractéristiques redox du bain de fusion.

Dans les exemples 11 et 12, la composition cible rentrait dans le domaine de la larnite ($2CaO.SiO_2$), avec une teneur en chaux proche de 60%. Il s'avère que la fusion intervient vers 1 600°C, bien avant la température théorique (>1 900°C), que le solide formé contient une proportion élevée de géhlénite, et que, de ce fait, la résistance à la lixiviation est acceptable. Par ailleurs les caractéristiques mécaniques sont bonnes, et surtout, la densité est remarquablement élevée (supérieure à 3), ce qui permet de réduire le volume du déchet final.

Exemple 10 : Traitement de boue de centrale nucléaire

On a mis en oeuvre les compositions de départ suivantes (en % massique) :

| Composant | CaCO_3 | SiO_2 | Al_2O_3 | Fe_2O_3 | Autres minéraux | Humidité et organiques |
|-----------|--------|-------|---------|---------|-----------------|------------------------|
| Terre (%) | 67,5 | 17,1 | 4,5 | 1,3 | 1,4 | 8,2 |
| Boue (%) | 12,3 | 11,5 | 2,1 | 9,1 | | 65 |

Ces compositions sont identiques à celles mentionnées précédemment, représentées aux références 6 pour la terre et 7 pour la boue sur la figure 2, excepté que la boue contient 65% d'eau.

Un mélange terre - boue - alumine (adjuvant) dans les proportions 50% - 45% - 5% fond vers 1 600°C et on obtient un produit biphasique comprenant une roche synthétique incorporant des petites inclusions de fonte, de composition suivante :

| Composant | CaO | SiO_2 | AlO_3 | Fonte | Autres minéraux |
|-----------|-----|-------|-------|-------|-----------------|
| % massique | 44,3 | 29,1 | 17,4 | 7,8 | 1,4 |

La phase de la roche synthétique est montrée sur la figure 3, en référence 9-1, dans le domaine de la géhlénite.

Le volume initial de 100 kg de déchet (boue + terre, hors alumine) est de 86,9 l, le volume final est de 17,2l le facteur de réduction de volume est de 5,1. Ce facteur de réduction très favorable est dû à :

- la teneur en eau de la boue

- le mélange terre-boue limitant les ajouts nécessaires

- la séparation de la fonte en inclusion, et à la densité de ces inclusions.

Le bloc de roche synthétique comporte des inclusions de fonte, d'une masse totale de 3,6 kg et d'un volume total de 0,54 l pour 100 kg de déchet initial.

Valeurs de densité :

- boue : 1,2 kg/l

- terre : 1,1 kg/l

- roche synthétique : 2,7 kg/l

- fonte : 7 kg/l.

Exemple 11 : Traitement de terre complétée en alumine

Avec la composition de terre de l'exemple 10, et un ajout de seulement 4% d'alumine (96% de terre pour 4% d'alumine), le mélange fond vers 1 600°C (à cause des impuretés hors CAS de la terre) et on obtient un produit biphasique comprenant une roche synthétique incorporant des inclusions de fonte de composition suivante :

| Composant | CaO | $SiO_2$ | $Al_2O_3$ | Fonte | Autres minéraux |
|---|---|---|---|---|---|
| % massique | 57,5 | 25,9 | 13,1 | 1,4 | 2,1 |

La composition cible de la roche synthétique est représentée en référence 9-2 sur la figure 3, dans le domaine de la larnite.

Le volume initial de 100 kg de déchet (boue + terre, hors alumine) est de 90,9 l, le volume final est de 21,8 L : le facteur de réduction de volume est de 4,2. Ce facteur de réduction très favorable est dû à la faiblesse de l'ajout d'alumine (faiblesse autorisée par la proximité de la composition initiale de la terre et de la composition cible), et à la forte densité de la roche synthétique (3 kg/l).

Exemple 12 : Traitement de béton ferraillé contenant environ 15% de fer

On a mise en oeuvre un béton brut non ferraillé de composition suivante (en % massique) :

| Composant | $CaCO_3$ $Ca(OH)_2$ | $SiO_2$ | $Al_2O_3$ | $Fe_2O_3$ | Autres minéraux | Eau |
|---|---|---|---|---|---|---|
| Béton (%) | 58,9 | 30,1 | 3,0 | 0,4 | 1,6 | 6 |

Cette composition de béton brut est identique à celle utilisée précédemment.

La composition de béton a été complémentée avec 20% en masse de ferraille.

Il est intéressant de mélanger ce béton à de la chaux, afin de l'enrichir en calcium. Certains bétons sont, d'origine, plus riches en calcium. Un mélange béton ferraillé - chaux - alumine (adjuvant) dans les proportions 75% - 17% - 8% fond vers 1 600°C et on obtient un produit biphasique d'une roche synthétique incorporant des inclusions de fonte de composition suivante, similaire à celle l'exemple 11, mais avec une plus forte proportion de fonte :

| Composant | CaO | $SiO_2$ | $Al_2O_3$ | Fonte | Autres minéraux |
|---|---|---|---|---|---|
| % massique | 47,8 | 21,4 | 11,6 | 18,0 | 1,1 |

La composition cible de la roche synthétique est représentée en référence 9-2 sur la figure 3, dans le domaine de la larnite, comme pour l'exemple 11.

Le volume initial de 100 kg de déchet (béton ferraillé seul) est de 100 l (le béton ferraillé en gravât est plus dense que le béton non ferraillé), le volume final est de 18,9 1 : le facteur de réduction de volume de 5,3 très favorable est dû à :

- la forte densité de la roche synthétique (3 kg/l, hors inclusions de fonte)

- la séparation de la fonte en inclusion, et à la densité de ces inclusions.

Le bloc de roche synthétique comporte des inclusions de fonte, d'une masse totale de 10,5 kg et d'un volume total de 1,7 l pour 100 kg de déchet initial.

**Revendications**

**1.** Procédé de conditionnement de déchets radioactifs, dans lequel on réalise les étapes successives suivantes :

a/ on traite des déchets radioactifs dont la composition de l'extrait sec après calcination à 950°C, appelé ci-après composition de départ, comprend au moins 90% de composés choisis parmi CaO, $Fe_2O_3$, $SiO_2$, $Al_2O_3$ et $B_2O_3$, et on complémente la composition desdits déchets de manière à atteindre une composition cible desdits déchets complémentés après calcination, et
b/ on porte lesdits déchets radioactifs complémentés en fusion et
c/ on coule ledit bain de fusion dans un conteneur, de manière à obtenir, après refroidissement, un produit comprenant une roche synthétique, vitreuse ou vitro-cristalline, présentant ladite composition cible,

**caractérisé en ce que** ladite composition de départ et ladite composition cible répondent aux définitions suivantes, dans un système ternaire CaO, $SiO_2$ et $X_2O_3$, dans lequel $X_2O_3$ est un oxyde trivalent ou mélange d'oxydes trivalents choisis parmi $Al_2O_3$, $Fe_2O_3$ et $B_2O_3$ :

- pour ladite composition de départ :

- $P_C$ et $P_X$ sont inférieurs à 90%, et
- $P_S$ est inférieur à 75%, et

- pour ladite composition cible :

- $P_C$ est de 35 à 60%, de préférence de 40 à 50 %, et
- $P_S$ est de 10 à 45%, de préférence de 20 à 40%,

- avec, dans les deux cas :

. $P_C+P_S+P_X = 100\%$, et
. $P_X = P_A+P_H+P_B$, avec
. $P_C = [M_C/(M_C+M_S+M_A+0,28M_H+2M_B)] \times 100\%$, et
. $P_S = [M_S/(M_C+M_S+M_A+0,28M_H+2M_B)] \times 100\%$, et
. $P_A = [M_A/(M_C+M_S+M_A+0,28M_H+2M_B)] \times 100\%$, et
. $P_H = [0,28M_H/(M_C+M_S+M_A+0,28M_H+2M_B)] \times 100\%$, et
. $P_B = [2M_B/(M_C+M_S+M_A+0,28M_H+2M_B)] \times 100\%$, et
. $P_i$ et $M_i$, avec i= C, S, A, H ou B, sont les pourcentages massiques ($P_i$) et, respectivement, les masses ($M_i$) de CaO (i =C), $SiO_2$ (i=S), $Al_2O_3$ (i=A), $Fe_2O_3$ (i=H) et $B_2O_3$ (i=B).

**2.** Procédé selon la revendication 1, **caractérisé en ce que** :

- à l'étape b/, on chauffe les déchets radioactifs dans un creuset et on les porte en fusion à une température de 1 250 à 1 650°C, et
- à l'étape c/, on coule ledit bain de fusion dans un conteneur, de préférence de contenance d'au moins 200 l, de préférence encore de contenance d'au moins 500 l, en vue de former desdits monolithes et on refroidit ledit bain de fusion ainsi conditionné, sans recuit, jusqu'à température ambiante, en une durée inférieure à 15 jours, de préférence inférieure à une semaine, de préférence encore inférieure à 24 heures.

**3.** Procédé selon la revendication 2, **caractérisé en ce qu'**à l'étape c/, on effectue l'étape de refroidissement en deux étapes, à savoir :

c.1/ on limite la vitesse de refroidissement dudit conteneur rempli dudit bain de fusion, dans la phase de refroidissement entre 1 250 et $\pm$ 1 000 °C, à une vitesse de refroidissement comprise entre 50°C/h et 250°C/h, puis

c.2/ on termine le refroidissement dudit conteneur de 1 000°C jusqu'à la température ambiante, sans limitation de vitesse de refroidissement, de préférence en plaçant ledit conteneur à l'air libre ou en le trempant dans l'eau froide jusqu'à ce que sa température descende jusqu'à la température ambiante.

**4.** Procédé selon l'une des revendications 1 à 3, **caractérisé en ce que** lesdits déchets radioactifs sont constitués de terre calcaire, gravats de béton, boues d'installations nucléaires, concentrats d'évaporateurs de centrales nucléaires, sable, et/ou cendres de déchets radioactifs incinérés.

**5.** Procédé selon l'une des revendications 1 à 4, **caractérisé en ce que** lesdits déchets radioactifs de départ présentent une composition de départ répondant à la définition suivante dans le système ternaire $CaO/SiO_2/X_2O_3$, dans lequel $X_2O_3$ et $P_i$ ont les significations données dans la revendication 1, avec :

Pc et $P_X$ sont inférieurs à 75 % et Ps est inférieur à 60 %.

**6.** Procédé selon l'une des revendications 1 à 5, **caractérisé en ce que** ladite composition cible correspond à des pourcentages massiques suivants :

- $P_C$ compris entre 40 et 50%, et
- $P_S$ compris entre 20 et 40%.

**7.** Procédé selon l'une des revendications 5 ou 6, **caractérisé en ce qu'**à l'étape a/, on réalise les étapes suivantes, dans lesquelles :

a.1/ on traite une terre calcaire et/ou des gravats de béton dont ladite composition de départ répond à la définition suivante dans un système ternaire $CaO/SiO_2/X_2O_3$, dans lequel $X_2O_3$ et $P_i$ ont les significations données dans la revendication 1 :

- $P_C$ est compris entre 30 et 80%, et
- $P_X$ est inférieur à 20%, et

a.2/ on ajoute de 5 à 50% de $X_2O_3$, choisi parmi $Al_2O_3$, $Fe_2O_3$ et $B_2O_3$.

**8.** Procédé selon la revendication 7, **caractérisé en ce qu'**à l'étape a.2/, on réalise un ajout de $B_2O_3$ inférieur à 10%, de préférence inférieur à 5% de la masse des déchets radioactifs à traiter et/ou $P_B$ est inférieur à 15%, de préférence inférieur à 7% dans ladite composition cible du monolithe obtenu.

**9.** Procédé selon la revendication 8, **caractérisé en ce qu'**à l'étape a.2/ :

- l'ajout de $B_2O_3$ est inférieur à 5% de la masse des déchets radioactifs à traiter à l'étape a.1/ et/ou $P_B$ est inférieur à 7% dans ladite composition cible du monolithe obtenu, et
- l'ajout de $Al_2O_3$ et $Fe_2O3$ est supérieur à 10%, de préférence supérieur à 20% de la masse des déchets radioactifs à traiter à l'étape a.1/, et/ou $P_X$ est supérieur à 15%, de préférence supérieur à 30% dans ladite composition cible du monolithe obtenu.

**10.** Procédé selon l'une des revendications 1 à 9, **caractérisé en ce que** l'on réalise le mélange de déchets radioactifs de compositions différentes pour obtenir ladite composition cible, sans ajout d'oxyde(s) trivalent(s) non radioactif(s) choisi(s) parmi $Al_2O_3$, $Fe_2O3$ et $B_2O_3$.

**11.** Procédé selon l'une des revendications 5 à 10, **caractérisé en ce que** l'on réalise le mélange de :

1/ une dite terre calcaire et/ou desdits gravats de béton de dites compositions de départ suivantes :

$P_C$ compris entre 50 et 80% et $P_X$ inférieur à 20%, et

2/ une boue de déchets radioactifs, de préférence une boue de centrale nucléaire, de dite composition de départ suivante :

$P_X$ compris entre 10 et 70%, de préférence de 15 à 40% et $P_C$ inférieur à 50%, de préférence inférieur à 35%.

**12.** Procédé selon l'une des revendications 7 à 11, **caractérisé en ce qu'**à l'étape a/, on réalise les étapes suivantes dans lesquelles :

a.1/ on traite un terre calcaires et/ou des gravats de béton dont ladite composition de départ répond à la définition suivante, dans le système ternaire $CaO/SiO_2/X_2O_3$ :

- Pc est compris entre 50 et 80%, et
- $P_S$ est compris entre 20 et 50%, et
- $P_X$ est inférieur ou égal à 20%, de préférence compris entre 4 et 10%, $X_2O_3$ étant un oxyde trivalent ou un mélange d'oxydes trivalents choisis parmi $Al_2O_3$ et $Fe_2O_3$, et $P_B$ =0, et

a.2/ on ajoute l'additif contenant $X_2O_3$ de manière à atteindre ladite composition cible de monolithe suivante dans le système ternaire $CaO/SiO_2/X_2O_3$ :

- $P_C$ est compris entre 35 et 55%, et
- $P_S$ est compris entre 15 et 40%, et
- $P_X$ est compris entre 10 et 45%.

**13.** Procédé selon l'une des revendications 1 à 12, **caractérisé en ce que** l'on extrait des terres calcaires les grosses particules, de taille supérieure à 1 cm, de préférence supérieure à 5 cm, de manière à ce que la composition de la partie fine s'approche de la composition cible, de préférence de manière à ce qu'elle atteigne ladite composition cible.

**14.** Procédé selon l'une des revendications 1 à 13, **caractérisé en ce que** :

- à l'étape b/, on porte lesdits déchets radioactifs complémentés en fusion, par chauffage par effet Joule, à l'aide d'électrodes en graphite, plongées dans le matériau de déchets radioactifs à traiter, et
- à l'étape c/, on obtient un produit biphasique comprenant une matrice de roche synthétique présentant ladite composition cible dans laquelle $X_2O_3$, est choisi parmi $Al_2O_3$ et $B_2O_3$, ladite matrice incorporant des inclusions de fonte.

**15.** Procédé selon l'une des revendications 2 à 14, **caractérisé en ce que** :

- avant d'introduire lesdits déchets radioactifs dans ledit creuset, on réalise le broyage desdits déchets radioactifs, de préférence pour obtenir une granulométrie inférieure à 5 cm, de préférence encore inférieure à 1 cm, d'une partie au moins des particules qu'il contient, et
- les fumées dégagées lors de la fusion des déchets radioactifs sont refroidies à moins de 200°C et les radioéléments gazeux tels que césium, qu'elles contiennent, sont piégés dans un filtre à particules.

**Claims**

**1.** A method for conditioning radioactive wastes, wherein the following successive steps are carried out:

a/ radioactive wastes are processed, for which the composition of the dry extract after calcination at 950°C, called hereafter the starting composition, comprises at least 90% of compounds selected from CaO, $Fe_2O_3$, $SiO_2$, $Al_2O_3$ and $B_2O_3$, and the composition of said wastes is supplemented so as to attain a target composition of said supplemented wastes after calcination, and
b/ said supplemented radioactive wastes are melted and
c/ said molten bath is cast into a container so as to obtain, after cooling, a product, comprising a vitreous or vitro-crystalline synthetic rock, having said target composition,

**characterized in that** said starting composition and said target composition fit the following definitions, in a CaO, $SiO_2$ and $X_2O_3$ ternary system, wherein $X_2O_3$ is a trivalent oxide or a mixture of trivalent oxides selected from $Al_2O_3$,

$Fe_2O_3$ and $B_2O_3$:

- for said starting composition:

- $P_C$ and $P_X$ are less than 90%, and
- $P_S$ is less than 75%, and

- for said target composition:

- $P_C$ is from 35 to 60%, preferably from 40 to 50%, and
- $P_S$ is from 10 to 45%, preferably from 20 to 40%,

- with, in both cases:

- $P_C + P_S + P_X = 100\%$, and
- $P_X = P_A + P_H + P_B$, with
- $P_C = [M_C/ (M_C + M_S + M_A + 0.28M_H + 2M_B)] \times 100\%$, and
- $P_S = [M_S/ (M_C + M_S + M_A + 0.28M_H + 2M_B)] \times 100\%$, and
- $P_A = [M_A/ (M_C + M_S + M_A + 0.28M_H + 2M_B)] \times 100\%$, and
- $P_H = [0.28M_H/ (M_C + M_S + M_A + 0.28M_H + 2M_B)] \times 100\%$, and
- $P_B = [2M_B/ (M_C + M_S + M_A + 0.28M_H + 2M_B)] \times 100\%$, and
- $P_i$ and $M_i$, with i = C, S, A, H or B, are the mass percentages ($P_i$) and the masses ($M_i$) of CaO (i=C), $SiO_2$ (i=S), $Al_2O_3$ (i=A), $Fe_2O_3$ (i=H) and $B_2O_3$ (i=B), respectively.

2. The method according to claim 1, **characterized in that**:

- in step b/, the radio-active wastes are heated in a crucible and they are melted at a temperature from 1,250°C to 1,650°C, and
- in step c/, said molten bath is cast into a container, preferably with a capacity of at least 200 L, still preferably with a capacity of at least 500 L, in order to form so-called monoliths and said thereby conditioned molten bath, without any annealing, is cooled down to room temperature, within a period of less than 15 days, preferably less than a week, still preferably less than 24 hours.

3. The method according to claim 2, **characterized in that** in step c/, the cooling step is carried out in two steps, i.e.:

c.1/ the cooling rate of said container filled with said molten bath, in the cooling phase between 1,250 and 1,000°C, is limited to a cooling rate comprised between 50°C/h and 250°C/h, and then
c.2/ the cooling of said container from 1,000°C to room temperature is completed without any limitation of the cooling rate, preferably by placing said container in open air or by soaking it in cold water until its temperature is lowered down to room temperature.

4. The method according to one of claims 1 to 3, **characterized in that** said radioactive wastes consist of limestone soil, concrete rubbles, sludges from nuclear installations, concentrates from nuclear power station evaporators, sand, and/or ashes of incinerated radioactive wastes.

5. The method according to one of claims 1 to 4, **characterized in that** said initial radioactive wastes have a starting composition fitting the following definition in the $CaO/SiO_2/X_2O_3$ ternary system, wherein $X_2O_3$ and $P_i$ have the meanings given in claim 1, with:

$P_C$ and $P_X$ being less than 75% and $P_S$ being less than 60%.

6. The method according to one of claims 1 to 5, **characterized in that** said target composition corresponds to the following mass percentages:

- $P_C$ comprised between 40 and 50%, and
- $P_S$ comprised between 20 and 40%.

7. The method according to one of claims 5 or 6, **characterized in that** in step a/, the following steps are carried out, wherein:

a.1/ limestone soil and/or concrete rubbles are processed, for which said starting composition fits the following definition in a $CaO/SiO_2/X_2O_3$ ternary system, wherein $X_2O_3$ and $P_i$ have the meaning given in claim 1:

- $P_C$ is comprised between 30 and 80%, and
- $P_X$ is less than 20%, and

a.2/ 5 to 50% of $X_2O_3$, selected from $Al_2O_3$, $Fe_2O_3$ and $B_2O_3$, are added.

8. The method according to claim 7, **characterized in that**, in step a.2/, an addition of $B_2O_3$ of less than 10%, preferably less than 5% of the mass of the radioactive wastes to be processed is carried out and/or $P_B$ is less than 15%, preferably less than 7% in said target composition of the obtained monolith.

9. The method according to claim 8, **characterized in that**, in step a.2/:

- the addition of $B_2O_3$ is less than 5% of the mass of the radioactive wastes to be processed in step a.1/ and/or $P_B$ is less than 7% in said target composition of the obtained monolith, and
- the addition of $Al_2O_3$ and $Fe_2O_3$ is greater than 10%, preferably greater than 20% of the mass of the radioactive wastes to be processed in step a.1/, and/or $P_X$ is greater than 15%, preferably greater than 30% in said target composition of the obtained monolith.

10. The method according to one of claims 1 to 9, **characterized in that** the mixing of radioactive wastes with different compositions is accomplished in order to obtain said target composition, without adding any non-radio-active trivalent oxide(s) selected from $Al_2O_3$, $Fe_2O_3$ and $B_2O_3$ .

11. The method according to one of claims 5 to 10, **characterized in that** mixing is carried out of:

1/ a so-called limestone soil and/or so-called concrete rubbles of the following so-called starting compositions:

$P_C$ comprised between 50 and 80%, and $P_X$ less than 20%, and

2/ a sludge of radioactive wastes, preferably a sludge from a nuclear power station with said following starting composition:

$P_X$ comprised between 10 and 70%, preferably from 15 to 40% and $P_C$ less than 50%, preferably less than 35%.

12. The method according to one of claims 7 to 11, **characterized in that** in step a/, the following steps are carried out, wherein:

a.1/ limestone soil and/or concrete rubbles are processed, for which said starting composition fits the following definition, in the $CaO/SiO_2/X_2O_3$ ternary system:

- $P_C$ is comprised between 50 and 80%, and
- $P_S$ is comprised between 20 and 50%, and
- $P_X$ is less than or equal to 20%, preferably comprised between 4 and 10%, $X_2O_3$ being a trivalent oxide or a mixture of trivalent oxides selected from $Al_2O_3$ and $Fe_2O_3$, and $P_B=0$, and

a.2/ the additive is added, containing $X_2O_3$, so as to attain said following monolith target composition in the $CaO/SiO_2/X_2O_3$ ternary system:

- $P_C$ is comprised between 35 and 55%, and
- $P_S$ is comprised between 15 and 40%, and
- $P_X$ is comprised between 10 and 45%.

13. The method according to one of claims 1 to 12, **characterized in that** the large particles are extracted from the limestone soils, particles with a size of more than 1 cm, preferably of more than 5 cm, so that the composition of the fine portion is closer to the target composition, preferably so that it attains said target composition.

14. The method according to one of claims 1 to 13, **characterized in that**:

- in step b/, said supplemental radioactive wastes are melted by Joule effect heating with graphite electrodes sunken into the material of radioactive wastes to be processed, and
- in step c/, a biphasic product is obtained, comprising a synthetic rock matrix having said target composition, wherein $X_2O_3$ is selected from $Al_2O_3$ and $B_2O_3$, said matrix incorporating cast iron inclusions.

15. The method according to one of claims 2 to 14, **characterized in that**:

- before introducing said radioactive wastes into said crucible, milling of said radioactive wastes is carried out, preferably for obtaining a grain size of less than 5 cm, still preferably less than 1 cm, of at least one portion of the particles which it contains, and
- the evolved fumes during the melting of the radioactive wastes are cooled down to less than 200°C and the gaseous radio-elements such as cesium, which they contain, are trapped in a particle filter.

**Patentansprüche**

1. Verfahren zur Konditionierung von radioaktiven Abfällen, bei dem die folgenden aufeinanderfolgenden Schritte durchgeführt werden:

a/ es werden radioaktive Abfälle behandelt, deren Trockenextrakt-Zusammensetzung nach Kalzinierung bei 950 °C, nachstehend als Ausgangszusammensetzung bezeichnet, wenigstens 90 % Verbindungen umfaßt, die aus CaO, $Fe_2O_3$, $SiO_2$, $Al_2O_3$ und $B_2O_3$ ausgewählt sind, und die Zusammensetzung der Abfälle wird ergänzt, um eine Zielzusammensetzung der ergänzten Abfälle nach Kalzinierung zu erhalten, und
b/ die ergänzten radioaktiven Abfälle werden zum Schmelzen gebracht, und
c/ das Schmelzbad wird in einen Behälter gegossen, um nach dem Abkühlen ein Produkt zu erhalten, das ein glasiges oder glasig-kristallines synthetisches Gestein umfaßt, welches die Zielzusammensetzung aufweist,

**dadurch gekennzeichnet, daß** die Ausgangszusammensetzung und die Zielzusammensetzung die folgenden Definitionen in einem ternären System CaO, $SiO_2$ und $X_2O_3$ erfüllen, wobei $X_2O_3$ ein dreiwertiges Oxid oder eine Mischung aus dreiwertigen Oxiden, die aus $Al_2O_3$, $Fe_2O_3$ und $B_2O_3$ ausgewählt sind, ist:

- für die Ausgangszusammensetzung:

  - $P_C$ und $P_X$ liegen unter 90 %, und
  - $P_S$ liegt unter 75 % und

- für die Zielzusammensetzung:

  - $P_C$ liegt zwischen 35 und 60 %, vorzugsweise zwischen 40 und 50 %, und
  - $P_S$ liegt zwischen 10 und 45 %, vorzugsweise zwischen 20 und 40 %,

- mit, in beiden Fällen:

  - $P_C + P_S + P_X = 100$ % und
  - $P_X = P_A + P_H + P_B$, mit
  - $P_C = [M_C/(M_C+M_S+M_A+0{,}28M_H+2M_B)] \times 100$ % und
  - $P_S = [M_S/(M_C+M_S+M_A+0{,}28M_H+2M_B)] \times 100$ % und
  - $P_A = [M_A/(M_C+M_S+M_A+0{,}28M_H+2M_B)] \times 100$ % und
  - $P_H = [0{,}28M_H/(M_C+M_S+M_A+0{,}28M_H+2M_B)] \times 100$ % und
  - $P_B = [2M_B/(M_C+M_S+M_A+0{,}28M_H+2M_B)] \times 100$ % und
  - $P_i$ und $M_i$, mit i = C, S, A, H oder B, sind die Massenprozentsätze ($P_i$) bzw. die Massen ($M_i$) von CaO (i=C), $SiO_2$ (i=S), $Al_2O_3$ (i=A), $Fe_2O_3$ (i=H) und $B_2O_3$ (i=B).

2. Verfahren nach Anspruch 1, **dadurch gekennzeichnet, daß**:

- bei Schritt b/ die radioaktiven Abfälle in einem Tiegel erhitzt werden und sie bei einer Temperatur von 1250 bis 1650 °C zum Schmelzen gebracht werden, und
- bei Schritt c/ das Schmelzbad in einen Behälter, vorzugsweise mit einem Fassungsvermögen von wenigstens 200 l, weiterhin vorzugsweise mit einem Fassungsvermögen von wenigstens 500 l, gegossen wird, im Hinblick auf die Bildung von Monolithen, und das so verpackte Schmelzbad ohne Glühen, innerhalb einer Zeitdauer von weniger als 2 Wochen, vorzugsweise von weniger als einer Woche, weiterhin vorzugsweise von weniger als 24 Stunden, bis auf Raumtemperatur abgekühlt wird.

3. Verfahren nach Anspruch 2, **dadurch gekennzeichnet, daß** bei Schritt c/ der Abkühlschritt in zwei Stufen vollzogen wird, nämlich:

c.1/ die Abkühlgeschwindigkeit des mit dem Schmelzbad gefüllten Behälters wird in der Abkühlphase zwischen 1250 und 1000 °C auf eine Abkühlgeschwindigkeit im Bereich zwischen 50 °C/Std. und 250 °C/Std. begrenzt, anschließend

c.2/ wird das Abkühlen des Behälters von 1000 °C bis auf Raumtemperatur ohne Abkühlgeschwindigkeitsbegrenzung beendet, vorzugsweise dadurch, daß der Behälter im Freien plaziert oder daß er in kaltes Wasser getaucht wird, bis seine Temperatur auf Raumtemperatur sinkt.

4. Verfahren nach einem der Ansprüche 1 bis 3, **dadurch gekennzeichnet, daß** die radioaktiven Abfälle von kalkhaltiger Erde, Betonschutt, Schlämmen aus Nuklearanlagen, Konzentraten aus Verdampfern von Kernkraftwerken, Sand und/oder Aschen von verbrannten radioaktiven Abfällen gebildet sind.

5. Verfahren nach einem der Ansprüche 1 bis 4, **dadurch gekennzeichnet, daß** die radioaktiven Ausgangsabfälle eine Ausgangszusammensetzung aufweisen, die die folgende Definition in dem ternären System $CaO/SiO_2/X_2O_3$ erfüllt, wobei $X_2O_3$ und Pi die in Anspruch 1 angegebenen Bedeutungen haben, mit:

$P_C$ und $P_X$ liegen unter 75 % und $P_S$ liegt unter 60 %.

6. Verfahren nach einem der Ansprüche 1 bis 5, **dadurch gekennzeichnet, daß** die Zielzusammensetzung folgenden Massenprozentsätzen entspricht:

- $P_C$ zwischen 40 und 50 % und
- $P_S$ zwischen 20 und 40 %.

7. Verfahren nach einem der Ansprüche 5 oder 6, **dadurch gekennzeichnet, daß** bei Schritt a/ die folgenden Schritte durchgeführt werden, bei denen:

a.1/ eine kalkhaltige Erde und/oder Betonschutt behandelt werden, deren bzw. dessen Ausgangszusammensetzung die folgende Definition in einem ternären System $CaO/SiO_2/X_2O_3$ erfüllt, wobei $X_2O_3$ und Pi die in Anspruch 1 angegebenen Bedeutungen haben:

- $P_C$ liegt zwischen 30 und 80 %, und
- $P_X$ liegt unter 20 %, und

a.2/ 5 bis 50 % $X_2O_3$, ausgewählt aus $Al_2O_3$, $Fe_2O_3$ und $B_2O_3$, zugegeben werden.

8. Verfahren nach Anspruch 7, **dadurch gekennzeichnet, daß** bei Schritt a.2/ eine $B_2O_3$-Zugabe von weniger als 10 %, vorzugsweise von weniger als 5 % der Masse der zu behandelnden radioaktiven Abfälle erfolgt und/oder $P_B$ in der Zielzusammensetzung des erhaltenen Monolithen weniger als 15 %, vorzugsweise weniger als 7 % beträgt.

9. Verfahren nach Anspruch 8, **dadurch gekennzeichnet, daß** bei Schritt a.2/:

- die $B_2O_3$-Zugabe weniger als 5 % der Masse der bei Schritt a.1/ zu behandelnden radioaktiven Abfälle beträgt und/oder $P_B$ in der Zielzusammensetzung des erhaltenen Monolithen weniger als 7 % beträgt, und
- die $Al_2O_3$- und $Fe_2O_3$-Zugabe mehr als 10 %, vorzugsweise mehr als 20 % der Masse der bei Schritt a.1/ zu behandelnden radioaktiven Abfälle beträgt und/oder $P_X$ in der Zielzusammensetzung des erhaltenen Monolithen mehr als 15 %, vorzugsweise mehr als 30 % beträgt.

**10.** Verfahren nach einem der Ansprüche 1 bis 9, **dadurch gekennzeichnet, daß** das Mischen von radioaktiven Abfällen mit unterschiedlichen Zusammensetzungen, um die Zielzusammensetzung zu erhalten, ohne Zugabe von dreiwertigem (dreiwertigen), nicht radioaktivem (nicht radioaktiven) Oxid(en), ausgewählt aus $Al_2O_3$, $Fe_2O_3$ und $B_2O_3$ vollzogen wird.

**11.** Verfahren nach einem der Ansprüche 5 bis 10, **dadurch gekennzeichnet, daß** gemischt werden:

1/ eine kalkhaltige Erde und/oder Betonschutt mit folgenden Ausgangszusammensetzungen:

$P_C$ zwischen 50 und 80 % und $P_X$ weniger als 20 %, und

2/ ein Schlamm von radioaktiven Abfällen, vorzugsweise ein Kernkraftwerksschlamm, mit folgender Ausgangszusammensetzung:

$P_X$ zwischen 10 und 70 %, vorzugsweise 15 bis 40 %, und $P_C$ weniger als 50 %, vorzugsweise weniger als 35 %.

**12.** Verfahren nach einem der Ansprüche 7 bis 11, **dadurch gekennzeichnet, daß** bei Schritt a/ die folgenden Schritte durchgeführt werden, bei denen:

a.1/ eine kalkhaltige Erde und/oder Betonschutt behandelt werden, deren bzw. dessen Ausgangszusammensetzung die folgende Definition in dem ternären System $CaO/SiO_2/X_2O_3$ erfüllt:

- $P_C$ liegt zwischen 50 und 80 %, und
- $P_S$ liegt zwischen 20 und 50 %, und
- $P_X$ beträgt weniger als oder gleich 20 %, liegt vorzugsweise zwischen 4 und 10 %, wobei $X_2O_3$ ein dreiwertiges Oxid oder eine Mischung aus dreiwertigen Oxiden, ausgewählt aus $Al_2O_3$ und $Fe_2O_3$, und $P_B$ = 0 ist, und

a.2/ das $X_2O_3$-haltige Additiv zugegeben wird, um die folgende Monolith-Zielzusammensetzung in dem ternären System $CaO/SiO_2/X_2O_3$ zu erhalten:

$P_C$ liegt zwischen 35 und 55 %, und

- $P_S$ liegt zwischen 15 und 40 %, und
- $P_X$ liegt zwischen 10 und 45 %.

**13.** Verfahren nach einem der Ansprüche 1 bis 12, **dadurch gekennzeichnet, daß** die groben Partikel mit einer Größe von über 1 cm, vorzugsweise über 5 cm, aus den kalkhaltigen Erden herausgelöst werden, so daß die Zusammensetzung des feinen Teils sich der Zielzusammensetzung nähert, vorzugsweise so, daß sie die Zielzusammensetzung erreicht.

**14.** Verfahren nach einem der Ansprüche 1 bis 13, **dadurch gekennzeichnet, daß**:

- bei Schritt b/ die ergänzten radioaktiven Abfälle durch Widerstandsheizung mit Hilfe von Graphitelektroden, die in das zu behandelnde radioaktive Abfallmaterial eingetaucht werden, zum Schmelzen gebracht werden, und
- bei Schritt c/ ein Zweiphasenprodukt erhalten wird, das eine Matrix aus synthetischem Gestein umfaßt, welche die Zielzusammensetzung aufweist, bei der $X_2O_3$ aus $Al_2O_3$ und $B_2O_3$ ausgewählt ist, wobei die Matrix Schmelzeinschlüsse enthält.

**15.** Verfahren nach einem der Ansprüche 2 bis 14, **dadurch gekennzeichnet, daß**:

- vor dem Einbringen der radioaktiven Abfälle in den Tiegel, die radioaktiven Abfälle zerkleinert werden, vorzugsweise um eine Korngröße von unter 5 cm, weiterhin vorzugsweise von unter 1 cm, wenigstens eines Teils der Teilchen, die er enthält, zu erhalten, und
- die während des Schmelzens der radioaktiven Abfälle abgezogenen Abgase auf weniger als 200 °C abgekühlt werden und die gasförmigen radioaktiven Elemente, wie Cäsium, die diese enthalten, in einem Partikelfilter aufgefangen werden.

FIG.1

FIG.2

FIG.3

FIG.4

FIG.5

FIG.6A

FIG.6B

FIG.6C

FIG.6D

FIG.7

FIG.8

**EP 2 415 055 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2741552
- FR 2502999
- WO 03038361 A
- FR 2741752